# EUROPÄISCHE PATENTSCHRIFT

(11) **EP 3 374 560 B1**
(45) Veröffentlichungstag und Bekanntmachung des Hinweises auf die Patenterteilung: **23.10.2019**
(21) Anmeldenummer: 16805016.9
(22) Anmeldetag: 11.11.2016
(51) Int. Cl.: D04H 18/02, G05D 19/02

(54) **FLOR-VERFESTIGUNGSVORRICHTUNG ZUM VERFESTIGEN VON FLOR UND STEUERUNGSEINRICHTUNG UND VERFAHREN ZUM BETRIEB VON ANTRIEBSEINRICHTUNGEN DER FLOR-VERFESTIGUNGSVORRICHTUNG**
FIBROUS-WEB-CONSOLIDATING APPLIANCE FOR CONSOLIDATING FIBROUS WEB AND CONTROL DEVICE AND METHOD FOR OPERATING DRIVE DEVICES OF THE FIBROUS-WEB-CONSOLIDATING APPLIANCE
DISPOSITIF DE CONSOLIDATION DE VOILE POUR LA CONSOLIDATION D'UN VOILE ET DISPOSITIF DE COMMANDE ET PROCÉDÉ DE FONCTIONNEMENT DE DISPOSITIFS D'ENTRAÎNEMENT DU DISPOSITIF DE CONSOLIDATION DE VOILE

(30) Priorität: 11.11.2015 DE 102015119470
(43) Veröffentlichungstag der Anmeldung: 19.09.2018
(73) Patentinhaber: AUTEFA Solutions Germany GmbH, 86316 Friedberg (DE)
(72) Erfinder: BINNIG, Joachim, 89343 Jettingen-Scheppach (DE); RICHTER, Christian, 86152 Augsburg (DE)
(74) Vertreter: Ernicke, Klaus Stefan
(86) Internationale Anmeldenummer: PCT/EP2016/077417
(87) Internationale Veröffentlichungsnummer: WO 2017/081241

(56) Entgegenhaltungen:
- EP-A1- 1 736 586
- EP-A1- 1 811 072
- EP-A1- 2 119 818
- EP-A2- 1 860 221
- US-A- 5 636 420

## Beschreibung

Die vorliegende Erfindung betrifft eine Flor-Verfestigungsvorrichtung, die zum Verfestigen von Flor ausgestaltet ist, eine Steuerungseinrichtung, die zum Betrieb von mindestens zwei Antriebseinrichtungen der Flor-Verfestigungsvorrichtung ausgestaltet ist, und ein Verfahren zum Betrieb der mindestens zwei Antriebseinrichtungen der Flor-Verfestigungsvorrichtung.

Die EP 1 811 072 A1 zeigt eine Flor-Verfestigungsvorrichtung mit einem Motor und zwei Kurbelwellen zum Antrieb der Nadeln sowie Schwingungsmessern am oberen Balken des Maschinenrahmens. Die Schwingungsmesser detektieren eine Balkenverformung und eine Annäherung an die Resonanzfrequenz. Bei Überschreiten von gestuften Schwingungs-Schwellwerten werden ein Alarm, ein synchroner Maschinenstopp oder ein Nothalt ausgelöst.

Das Verwenden von Flor-Verfestigungsvorrichtungen zum Verfestigen von Flor ist allgemein bekannt. In einer Flor-Verfestigungsvorrichtung wird in einem noch unverfestigten Faserverbund (Flor) eine Vielzahl von Nadeln eingestochen. Die Nadeln können dabei beispielsweise eine Dichte bis zu 20.000 pro Meter der Arbeitsbreite aufweisen. Die Nadeln weisen Widerhaken auf, mit denen eine Verschlingung der Fasern im Flor bewirkt wird, wenn die Nadeln in den Flor eingestochen werden. Die Nadeln werden bei hoher Frequenz eingestochen, welche beispielsweise bis ca. 60 Hz betragen kann. Durch die Verschlingung der Fasern wird eine Erhöhung der Materialdichte erreicht und damit auch eine Materialfestigkeit erzeugt. Im Verbund von mehreren hintereinander geschalteten Flor-Verfestigungsvorrichtungen können beispielsweise mehr als 1000 Einstiche/cm2 in den Flor eingebracht werden.

Eine Flor-Verfestigungsvorrichtung umfasst Nadelungseinrichtungen, die Bretter mit Nadeln aufweisen. Die Nadelungseinrichtungen werden während des Betriebs der Flor-Verfestigungsvorrichtung so bewegt, dass die Bretter mit ihrer mit Nadeln besetzten Seite auf einen ablaufenden Flor einschlagen. Dadurch werden die Nadeln in den Flor eingebracht und verfestigen diesen. Oft werden in einer Flor-Verfestigungsvorrichtung zwei oder mehr Nadelungseinrichtungen verwendet. Hierbei kann der Flor in einer Flor-Verfestigungsvorrichtung von unten und oben gleichzeitig vernadelt werden. Das Bewegen der Nadelbretter erfolgt z.B. mittels eines Kurbeltriebs.

Durch die Bewegungen in der Flor-Verfestigungsvorrichtung entstehen Schwingungs-Anregungen (im Nachfolgenden auch Anregungen genannt). Sie entstehen zum einen durch den Kurbeltrieb und zum anderen durch den Einschlag der Nadeln in den Flor.

Die Schwingungs-Anregung, die durch den Kurbeltrieb entsteht, ist eine Anregung der 1. und der 2. Ordnung. Die durch den Kurbeltrieb erzeugte Anregung der 1. Ordnung kann oft durch Auswuchtung eliminiert werden.

Das Einstechen der Nadeln in den Flor bewirkt das Entstehen von Nadeleinstichkräften, die zusätzlich eine weitere Schwingungs-Anregung ergeben. Diese Anregung kann je nach Fasermaterial, Flächengewicht und Nadeldichte im Bereich der 4. bis 7. Ordnung liegen und kann nicht vermieden werden.

Beide Schwingungs-Anregungen führen dazu, dass der Rahmen der Flor-Verfestigungsvorrichtung, an dem die Nadelungseinrichtungen angeordnet sind, zum Schwingen gebracht wird. Zu hohe Schwingungen, die insbesondere bei Resonanz eintreten, können zur Beschädigung der Flor-Verfestigungsvorrichtung führen.

Um potentielle Schädigungen zu vermeiden, wird der Rahmen einer Flor-Verfestigungsvorrichtung, an dem die Nadelungseinrichtungen angeordnet sind, in der Regel sehr steif ausgelegt. Üblicherweise liegt die Resonanz- bzw. Eigen-Frequenz des Rahmens (d.h. Frequenz, mit der der Rahmen nach einmaliger Anregung als Eigenform schwingen kann) oberhalb der Anregung der 2. Ordnung, die durch den Kurbeltrieb entsteht. Die Eigenfrequenz kann zum Beispiel im Bereich von ca. 80 oder 85 Hz sein. Eine entsprechende Ausgestaltung des Rahmens hinsichtlich Anregungen höherer Ordnungen, die durch die Nadeleinstichkräfte entstehen, ist allerdings nur schwer möglich.

Werden beispielsweise Flor-Verfestigungsvorrichtungen mit vier Nadelbrettern verwendet, so werden zwei der vier Bretter von einer Seite (z.B. der oberen Seite) des ablaufenden Flors und die anderen der zwei Bretter von der gegenüberliegenden Seite (z.B. der unteren Seite) des ablaufenden Flors zu dem und von dem Flor bewegt. Die Einstiche können beispielsweise abwechselnd von den beiden Seiten erfolgen. In diesem Fall kann eine Anregung entstehen, die durch Überlagerung im Bereich der 2., 4. und 6. Ordnung liegen kann. Oft wird schon eine Anregung im Bereich der 4. Ordnung als kritisch angesehen.

Verstärkt sich die Anregung, kann sie zur Beschädigung der Flor-Verfestigungsvorrichtung führen. Oft wird dies durch ein Sperren bestimmter Drehzahlbereiche vermieden. Der optimale Drehzahlbereich einer Flor-Verfestigungsvorrichtung kann allerdings von einer Vielzahl an Faktoren abhängen, z.B. von physikalischen und/oder optischen Eigenschaften des Produkts, der Spezifikation von vor- und/oder nach-geschalteten Maschinen. Dies hat jedoch starke Einschränkungen auf der Seite des Anwenders zufolge. Ein Verschieben der Resonanz- bzw. der Eigen-Frequenz des Rahmens in einen höheren Frequenzbereich (z.B. deutlich über 100 Hz) durch eine entsprechend geeignete Konstruktion des Rahmens hat einem erheblichen Kostenaufwand zufolge und ist bei den bekannten Flor-Verfestigungsvorrichtungen kaum bis gar nicht realisierbar.

Aus der EP 2 119 818 A1 und der EP 1 860 221 A2 ist der Einbau von zusätzlichen aufwändigen Schwingungstilgern bekannt.

Somit besteht Bedarf an Flor-Verfestigungsvorrichtungen, die während des Betriebs mit Anregungen verschiedener Ordnungen zurechtkommen, ohne dass aufwändige Einstellungen bei den Flor-Verfestigungsvorrichtungen vorgenommen werden müssen.

Damit ist die Aufgabe der vorliegenden Erfindung, eine Flor-Verfestigungsvorrichtung und eine Steuerung des Betriebs einer Flor-Verfestigungsvorrichtung bereitzustellen, die von Anregungen, die während des Betriebs der Flor-Verfestigungsvorrichtung entstehen, unabhängig sind.

Diese Aufgabe wird durch die Gegenstände der unabhängigen Ansprüche gelöst. Weitere Ausgestaltungen werden aus den abhängigen Ansprüchen, der nachfolgenden Beschreibung und den beigefügten Zeichnungen ersichtlich.

Die vorliegende Erfindung umfasst eine Flor-Verfestigungsvorrichtung, die zum Verfestigen von Flor ausgestaltet ist und die aufweist: mindestens zwei Antriebseinrichtungen, von denen jede ausgestaltet ist, zumindest eine Nadelungseinrichtung der Flor-Verfestigungsvorrichtung anzutreiben, wobei jede Nadelungseinrichtung zum Verfestigen von Flor ausgestaltet ist und von einer der mindestens zwei Antriebseinrichtungen angetrieben wird; mindestens eine Schwingungs-Erfassungseinrichtung, die ausgestaltet ist, Daten zu Schwingungen zu erfassen, wobei die Schwingungen solche Schwingungen umfassen, die durch den Betrieb der Nadelungseinrichtungen entstehen; und eine Steuerungseinrichtung, die ausgestaltet ist, die von der Schwingungs-Erfassungsvorrichtung erfassten Daten zu Schwingungen zu empfangen und den Betrieb der mindestens zwei Antriebseinrichtungen in Erwiderung auf das Empfangen der Daten zu Schwingungen zu steuern.

Die Antriebseinrichtungen können jeweils einen eigenen Antriebsstrang und einen eigenen Antrieb aufweisen. Ferner ist es möglich, dass mehrere Antriebseinrichtungen einen gemeinsamen Antrieb und jeweils einen eigenen Antriebsstrang haben. Die Steuerung des Betriebs der mindestens zwei Antriebseinrichtungen kann durch Steuerung der besagten eigenen Antriebe oder zumindest eines eigenen Antriebsstrang erfolgen. Letzteres ist durch eine Einstellvorrichtung im Bereich zumindest eines eigenen Antriebsstrangs möglich. Die Einstellvorrichtung kann z.B. von einer bevorzugt im Betrieb steuerbaren Wellenkupplung, einem steuerbaren Getriebe, insbesondere Shiftgetriebe, oder dgl. gebildet werden.

Die Schwingungs-Erfassung kann auf verschiedene Weise erfolgen, insbesondere direkt oder indirekt. Bei einer direkten Erfassung können die Schwingungen im laufenden Produktionsbetrieb der Flor-Verfestigungsvorrichtung messtechnisch erfasst und zur Steuerung des Betriebs der mindestens zwei Antriebseinrichtungen benutzt werden. Bei einer indirekten Erfassung können die Schwingungen vorab bei der Einrichtung einer Flor-Verfestigungsvorrichtung zusammen mit den zugehörigen Einschlag- oder Hubfrequenzen der Nadelungseinrichtungen messtechnisch erfasst werden. Hieraus kann eine Zuordnung der besagten Hubfrequenzen zu den dabei auftretenden Schwingungen gebildet werden, z.B. in Form eines Kennfelds. Diese vorrichtungsspezifische Zuordnung kann gespeichert werden. Im Produktionsbetrieb der Flor-Verfestigungsvorrichtung können die Hubfrequenzen der Nadelungseinrichtungen messtechisch detektiert und die zugehörigen Schwingungen durch Abfrage der Zuordnung bzw. des Kennfelds mittelbar erfasst und dann zur Steuerung des Betriebs der mindestens zwei Antriebseinrichtungen benutzt werden. Diese Möglichkeiten der Schwingungs-Erfassung können einzeln oder in beliebiger Kombination genutzt werden. Ferner ist die Erfassung einer Resonanzfrequenz durch Berechnung möglich.

Dadurch, dass die Flor-Verfestigungsvorrichtung beim Antreiben der Nadelungseinrichtungen die Schwingungen berücksichtigt, die durch den Betrieb der Nadelungseinrichtungen entstehen, ist sie in der Lage, zielgerichtet, schnell und flexibel auf kritische Situationen reagieren. Kritische Schwingungs-Anregungen können, wie oben dargestellt, insbesondere durch den Einstich der Nadeln in den Flor entstehen und können Anregungen der 4. bis 7. Ordnung erreichen, auf die der Rahmen der Flor-Verfestigungsvorrichtung nicht ausgerichtet ist. Insbesondere durch die Steuerungseinrichtung wird eine Steuerung des Betriebs einer Flor-Verfestigungsvorrichtung bereitgestellt, die von Anregungen, die während des Betriebs der Flor-Verfestigungsvorrichtung entstehen, unabhängig ist. Es wird darüber hinaus ein intelligentes und unabhängiges Betreiben der Flor-Verfestigungsvorrichtung bereitgestellt, mit dem drohende Schäden an der Flor-Verfestigungsvorrichtung von der Maschine selbst behoben werden.

Gemäß der vorliegenden Erfindung ist die Steuerungseinrichtung ausgestaltet, den Betrieb der mindestens zwei Antriebseinrichtungen durch Übermitteln von Steuerungs-Informationen an die Antriebseinrichtungen zu steuern, wobei: die Steuerungsinformationen Informationen zu einer Phasenverschiebung zwischen zwei der mindestens zwei Antriebseinrichtungen aufweist, mit der die zwei Antriebseinrichtungen zu betreiben sind; und die Phasenverschiebung eine Phasenverschiebung ist, die in Erwiderung auf das Empfangen der Daten zu Schwingungen bestimmt wurde.

Die Phasenverschiebung der Antriebseinrichtungen kann zwischen deren Antrieben oder Antriebssträngen bestehen und eingestellt werden. Durch das Einstellen einer Phasenverschiebung zwischen zwei Antriebseinrichtungen in Erwiderung auf Schwingungen, die in der Flor-Verfestigungsvorrichtung erfasst wurden, wird eine zielgerichtete und ggf. schnelle Reaktion auf Schwingungen in der Vorrichtung gewährleistet, die negative und schädigende Auswirkungen auf die Flor-Verfestigungsvorrichtung haben können. Arbeiten die zwei Antriebseinrichtungen bereits mit einer Phasenverschiebung bzw. ist bereits eine aktuelle Phasenverschiebung gegeben, entspricht die Phasenverschiebung, die eingestellt wird, einer neuen bzw. geänderten Phasenverschiebung. Mit der (neuen bzw. geänderten) Phasenverschiebung wird das Arbeitsverhalten der Antriebseinrichtungen geändert. Dies ändert die in der Vorrichtung entstehenden Schwingungen. Werden Schwingungen erfasst, die der Vorrichtung schaden können, wird eine Phasenverschiebung bestimmt, die das weitere Betreiben mit diesen Schwingungen verhindert.

Gemäß einer Ausführungsform der vorliegenden Erfindung ist die Steuerungseinrichtung ausgestaltet: eine Eingabe zu erfassen, die Angaben zu der Phasenverschiebung aufweist; oder die Phasenverschiebung zu bestimmen. Damit kann die Steuerung auf zwei Arten ausgeführt werden:
durch fachmännische Kontrolle oder automatisiert. Im ersten Fall wird der Fachmann die Daten zu den erfassten Schwingungen sichten und durch entsprechende Eingabe bewirken, dass die Steuerungseinrichtung die Steuerung mit einer vom Fachmann kontrollierten Phasenverschiebung vornimmt. Im zweiten Fall bestimmt die Steuerungseinrichtung die Phasenverschiebung selbstständig, d.h. ohne die Kontrolle des Fachmanns und nimmt dann eine entsprechende Steuerung vor.

Gemäß einer Ausführungsform zeigen die Daten zu den Schwingungen zumindest Folgendes an: eine Anregungsfrequenz, die durch das Antreiben der Nadelungseinrichtungen entsteht, und eine Resonanzfrequenz der Flor-Verfestigungsvorrichtung und/oder eine Schwingungsamplitude, die durch das Antreiben der Nadelungseinrichtungen (53_1, 103_1, 53_2, 103_2) entsteht, und einen Grenzwert für die Schwingungsamplitude, der im Bereich der Resonanzfrequenz der Flor-Verfestigungsvorrichtung (100) liegt.

Die Anregungsfrequenz ist die durch die Antriebsanregung entstehende Reaktionsfrequenz der Flor-Verfestigungsvorrichtung. Es kann sich hierbei um eine einzelne Frequenz oder um mehrere Frequenzen bzw. ein Frequenzspektrum handeln. Bei der Resonanzfrequenz gilt Entsprechendes.

Gemäß einer Ausführungsform ist die Steuerungseinrichtung ausgestaltet, die Phasenverschiebung derart zu bestimmen, dass die besagte Anregungsfrequenz, die durch das Antreiben der Nadelungseinrichtungen entsteht, und die Resonanzfrequenz der Flor-Verfestigungsvorrichtung nicht zusammenfallen und/oder dass die Schwingungsamplitude, die durch das Antreiben der Nadelungseinrichtungen entsteht, den Amplituden-Grenzwert im Bereich der Resonanzfrequenz nicht überschreitet. Dies vermeidet Schäden an der Flor-Verfestigungsvorrichtung, die durch übermäßige Schwingungsamplituden beim Zusammenfallen der Anregungsfrequenz und der Resonanzfrequenz bzw. bei einer Grenzwertüberschreitung entstehen können.

Gemäß einer Ausführungsform der vorliegenden Erfindung ist die Steuerungseinrichtung ausgestaltet, die Phasenverschiebung zu bestimmen, wenn die Daten zu den Schwingungen anzeigen, dass sich die Anregungsfrequenz und die Resonanzfrequenz nähern und/oder dass die Schwingungsamplitude, die durch das Antreiben der Nadelungseinrichtungen entsteht, sich dem Amplituden-Grenzwert im Bereich der Resonanzfrequenz nähert. Dies kann bei Feststellen einer zu engen Annäherung erfolgen. Damit wird ein kontrolliertes Ändern der Phasenverschiebung vorgenommen.

Gemäß einer Ausführungsform der vorliegenden Erfindung ist die Steuerungseinrichtung ausgestaltet, ein Warnsignal zu senden, wenn die Daten zu den Schwingungen anzeigen, dass sich die Anregungsfrequenz und die Resonanzfrequenz zu stark nähern und/oder dass die Schwingungsamplitude, die durch das Antreiben der Nadelungseinrichtungen entsteht, sich dem Amplituden-Grenzwert im Bereich der Resonanzfrequenz unzulässig nähert. Damit wird die Kontrolle in Situationen erhöht, in denen die Schwingungen des Rahmens anfangen, sich den kritischen Schwingungen zu nähern, die zu Schaden an der Vorrichtung führen können oder mit sehr hoher Wahrscheinlichkeit führen werden.

Für die Ausbildung der Schwingungs-Erfassungseinrichtung gibt es verschiedene Möglichkeiten, insbesondere für die besagte direkte und indirekte Schwingungs-Erfassung.

Gemäß einer Ausführungsform der vorliegenden Erfindung ist zumindest eine der mindestens einen Schwingungs-Erfassungseinrichtung derart ausgestaltet, dass sie einen Schwingungssensor, z.B. einen Beschleunigungssensor, umfasst oder ein Schwingungssensor bzw. Beschleunigungssensor ist. Dies ist für eine direkte Schwingungs-Erfassung und im Produktionsbetrieb von Vorteil. Ein Schwingungssensor bzw. Beschleunigungssensor bzw. dessen Signalauswertung bestimmt zuverlässig, ob eine Geschwindigkeits- und damit Schwingungs-Zunahme oder -Abnahme stattfindet. Damit wird die Zuverlässigkeit der erfindungsgemäßen Vermeidung von Schädigungen der Flor-Verfestigungsvorrichtung erhöht.

Gemäß einer anderen alternativen oder zusätzlichen Ausführungsform der vorliegenden Erfindung weist die Schwingungs-Erfassungseinrichtung einen Sensor für die Hubfrequenz der Nadelungseinrichtungen und eine gespeicherte vorrichtungsspezifische Zuordnung, insbesondere ein Kennfeld, der Hubfrequenzen zu den hierbei entstehenden Schwingungen auf. Letztere können in der vorgenannten Weise durch einen Schwingungssensor detektiert werden. Die besagte Hubfrequenz kann auf beliebige Weise sensorisch erfasst werden, z.B. direkt an der oder den Nadelungseinrichtungen oder indirekt über die Antriebsdrehzahl. Die Zuordnung bzw. das Kennfeld kann an beliebiger Stelle gespeichert und für die Abfrage durch die Steuerungseinrichtung bereitgehalten werden, z.B. in einem integrierten Datenspeicher bzw. einer Technologie-Datenbank der Steuerungseinrichtung. Die Zuordnung bzw. das Kennfeld kann bei der vorgenannte Einrichtung einer Flor-Verfestigungsvorrichtung erstellt werden, wobei im Produktionsbetrieb die Erfassung der Hubfrequenz und die Abfrage von Zuordnung/Kennfeld erfolgen. Der einzeln oder mehrfach eingesetzte Schwingungssensor kann temporär benutzt und dann wieder von der Flor-Verfestigungsvorrichtung entfernt werden. Die temporäre Benutzung kann z.B. beim Einrichten oder Umstellung der Flor-Verfestigungsvorrichtung vorgenommen werden. Das Einrichten oder Umstellung kann unter Verwendung unterschiedlicher Flore bzw. Florbahnen durchgeführt werden.

Gemäß einer Ausführungsform weist die Flor-Verfestigungsvorrichtung einen Rahmen auf. Gemäß einer weiteren Ausführungsform ist die mindestens eine Schwingungs-Erfassungseinrichtung am Rahmen angeordnet. Die mindestens eine Schwingungs-Erfassungseinrichtung misst somit die Schwingungen am Rahmen. Der Rahmen ist der Ort, an dem die auftretenden Schwingungen zusammenkommen, und ist darüber hinaus der Teil der Vorrichtung, an dem Schäden aufgrund des Auftritts zu hoher Schwingungen am wahrscheinlichsten sind. Das Erfassen der Schwingungen am Rahmen erhöht somit die Effektivität und die Zuverlässigkeit der erfindungsgemäßen Vermeidung von Schädigungen der Flor-Verfestigungsvorrichtung. Dies gilt für die besagte direkte und indirekte Schwingungs-Erfassung.

Gemäß einer Ausführungsform ist die Resonanzfrequenz eine am Rahmen erfasste Frequenz.

Gemäß einer Ausführungsform weist die Flor-Verfestigungsvorrichtung mindestens zwei Schwingungs-Erfassungseinrichtungen auf, insbesondere mit Schwingungssensor(en), die an zwei verschiedenen Seiten der Flor-Verfestigungsvorrichtung angeordnet sind. Damit wird die Diversität beim Verbreiten der Schwingungen berücksichtigt. Ferner werden auf diese Weise mehrere kritische Punkte am Rahmen der Flor-Verfestigungsvorrichtung überwacht werden, was die Gewährleistung der Vermeidung von Schäden an der Flor-Verfestigungsvorrichtung erhöht.

Gemäß einer weiteren Ausführungsform ist eine der mindestens zwei Schwingungs-Erfassungseinrichtungen, insbesondere mit Schwingungssensor(en), oberhalb der Nadelungseinrichtungen angeordnet, und zumindest eine weitere der mindestens zwei Schwingungs-Erfassungseinrichtungen ist unterhalb der Nadelungseinrichtungen angeordnet. Auf diese Weise wird sichergestellt, dass gerade die Schwingungen, die aufgrund des Betriebs der Nadelungseinrichtungen entstehen und die besonders schädigend für die Flor-Verfestigungsvorrichtung sind, überwacht werden.

Gemäß einer Ausführungsform ist zumindest eine der mindestens zwei Schwingungs-Erfassungseinrichtungen, insbesondere mit Schwingungssensor(en), an der oberen Seite des Rahmens angeordnet, und zumindest eine weitere der mindestens zwei Schwingungs-Erfassungseinrichtungen ist an der unteren Seite des Rahmens angeordnet. Da Schäden, die durch zu hohe Schwingungen entstehen, insbesondere am Rahmen der Flor-Verfestigungsvorrichtung entstehen, wird damit die Überwachung der schädigenden Schwingungen und die Gewährleistung der Vermeidung von Schäden an der Flor-Verfestigungsvorrichtung erhöht.

Gemäß einer Ausführungsform weisen die Nadelungseinrichtungen mindestens eine obere Nadelungseinrichtung und mindestens eine untere Nadelungseinrichtung auf, wobei die obere Nadelungseinrichtung an der oberen Seite des Rahmens angeordnet ist und die mindestens eine untere Nadelungseinrichtung an der unteren Seite des Rahmens angeordnet ist, wobei jede der Nadelungseinrichtungen mindestens ein Brett mit Nadeln zum Verfestigen von Flor aufweist. Die mindestens zwei Antriebseinrichtungen weisen mindestens eine obere Antriebseinrichtung und mindestens eine untere Antriebseinrichtung auf, wobei jede der oberen Antriebseinrichtungen ausgestaltet ist, eine der oberen Nadelungseinrichtungen anzutreiben, und jede der unteren Antriebseinrichtungen ausgestaltet ist, eine der unteren Nadelungseinrichtungen anzutreiben.

Gemäß einer Ausführungsform weist die Flor-Verfestigungsvorrichtung eine Fördereinrichtung zum Transport des bahnartigen Flors durch die Nadelungseinrichtungen auf. Ferner kann die Flor-Verfestigungsvorrichtung eine Florführung an den Nadelungseinrichtungen aufweisen. Diese kann eine stationäre obere und untere Platte mit Durchgangsöffnungen für Nadeln aufweisen, wobei die Platten den Flor beim Einstich und beim Nadelrückzug halten.

Die vorliegende Erfindung betrifft ferner eine Steuerungseinrichtung, die ausgestaltet ist, Daten zu Schwingungen zu empfangen, die von einer Schwingungs-Erfassungsvorrichtung einer Flor-Verfestigungsvorrichtung erfasst wurden, wobei die Schwingungen solche Schwingungen umfassen, die durch den Betrieb von Nadelungseinrichtungen der Flor-Verfestigungsvorrichtung entstehen; und den Betrieb von mindestens zwei Antriebseinrichtungen der Flor-Verfestigungsvorrichtung in Erwiderung auf das Empfangen der Daten zu Schwingungen zu steuern, wobei jede der Antriebseinrichtungen ausgestaltet ist, zumindest eine Nadelungseinrichtung der Flor-Verfestigungsvorrichtung anzutreiben, und jede Nadelungseinrichtung zum Verfestigen von Flor ausgestaltet ist und von einer der mindestens zwei Antriebseinrichtungen angetrieben wird, gemäss Anspruch 14.

Darüber hinaus betrifft die vorliegende Erfindung ein Verfahren zum Steuern des Betriebs von mindestens zwei Antriebseinrichtungen einer Flor-Verfestigungsvorrichtung, wobei die Flor-Verfestigungsvorrichtung zum Verfestigen von Flor ausgestaltet ist und jede der Antriebseinrichtungen der Flor-Verfestigungsvorrichtung zumindest eine Nadelungseinrichtung der Flor-Verfestigungsvorrichtung antreibt, die zum Verfestigen von Flor ausgestaltet ist und von einer der mindestens zwei Antriebseinrichtungen angetrieben wird, wobei das Verfahren aufweist: ein Empfangen von Daten zu Schwingungen, die von einer Schwingungs-Erfassungsvorrichtung einer Flor-Verfestigungsvorrichtung erfasst wurden, wobei die Schwingungen solche Schwingungen umfassen, die durch den Betrieb von Nadelungseinrichtungen der Flor-Verfestigungsvorrichtung entstehen; und ein Steuern des Betriebs der mindestens zwei Antriebseinrichtungen der Flor-Verfestigungsvorrichtung in Erwiderung auf das Empfangen der Daten zu Schwingungen, gemäss Anspruch 15. Das Verfahren ist insgesamt derart ausgestaltet, dass es alle oder zumindest einen Teil der hierin beschriebenen Schritte aufweist.

Auch durch die erfindungsgemäße Steuerungseinrichtung und das erfindungsgemäße Verfahren werden die in der vorliegenden Beschreibung beispielhaft dargestellten Vorteile erzielt. Es ist anzumerken, dass die vorliegende Erfindung nicht auf die hierin genannten Vorteile beschränkt ist und auch zu weiteren Vorteilen führt oder führen kann, die nicht explizit genannt sind.

Die Erfindung ist in den Zeichnungen beispielsweise und schematisch dargestellt. Es zeigen:
- Figur 1:: eine Flor-Verfestigungsvorrichtung, die gemäß einer Ausführungsform der vorliegenden Erfindung ausgestaltet ist;
- Figur 2:: eine detailliertere Sicht auf eine Nadelungsbahn der Flor-Verfestigungsvorrichtung gemäß einer Ausführungsform der vorliegenden Erfindung;
- Figur 3:: eine Flor-Verfestigungsvorrichtung, die gemäß einer Ausführungsform der vorliegenden Erfindung ausgestaltet ist;
- Figur 4:: eine Flor-Verfestigungsvorrichtung, die gemäß einer Ausführungsform der vorliegenden Erfindung ausgestaltet ist;
- Figur 5:: eine Flor-Verfestigungsvorrichtung, die gemäß einer Ausführungsform der vorliegenden Erfindung ausgestaltet ist;
- Figuren 6a-6b: eine Steuerungseinrichtung gemäß einer Ausführungsform der vorliegenden Erfindung, die den Betrieb von Antriebsvorrichtungen einer Flor-Verfestigungsvorrichtung steuert;
- Figuren 7a-7h: mindestens eine Schwingungs-Erfassungseinrichtung einer Flor-Verfestigungsvorrichtung die gemäß einer Ausführungsform der vorliegenden Erfindung;
- Figur 8: eine Schwingungs-Erfassungseinrichtung gemäß einer Ausführungsform der vorliegenden Erfindung;
- Figur 9: eine beispielhafte Ausgestaltung der oben beschriebenen Steuerungseinrichtung 111 gemäß einer Ausführungsform der vorliegenden Erfindung;
- Figur 10: Schritte eines Verfahrens zum Betrieb von mindestens zwei Antriebseinrichtungen einer Flor-Verfestigungsvorrichtung gemäß einer Ausführungsform der vorliegenden Erfindung und
- Figur 11:: eine Flor-Verfestigungsvorrichtung, die gemäß einer weiteren Ausführungsform der vorliegenden Erfindung ausgestaltet ist.

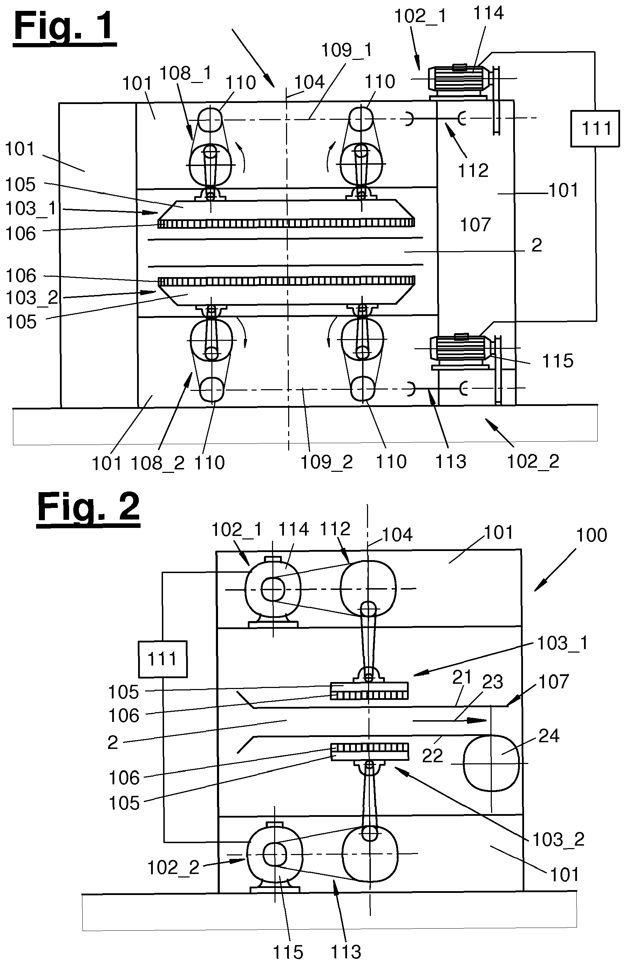

Figuren 1 bis 5 und 11 zeigen verschiedene mögliche beispielhafte Ausgestaltungen einer Flor-Verfestigungsvorrichtung 100. Diese Ausgestaltungen sind jedoch nicht abschließend. Es ist anzumerken, dass im Nachfolgenden gleiche oder ähnliche Objekte mit denselben Bezugszeichen versehen sind.

Figur 1 zeigt die Ausgestaltung einer Flor-Verfestigungsvorrichtung 100 gemäß einer ersten Ausführungsform der vorliegenden Erfindung. Die Flor-Verfestigungsvorrichtung 100 weist ein Gestell 101 in Form eines Rahmens auf. Die Flor-Verfestigungsvorrichtung 100 umfasst eine obere Nadelungseinrichtung 103_1, die an der oberen Seite des Rahmens 101 angebracht ist, und eine untere Nadelungseinrichtung 103_2, die an der unteren Seite des Rahmens 101 angebracht ist. Beide Nadelungseinrichtungen 103_1, 103_2 sind entlang derselben vertikalen Achse 104 angeordnet. Jede von ihnen weist mindestens ein Brett 105 mit Nadeln 106 auf, mittels dessen die Verfestigung des Flors ausgeführt wird. Die Nadel-Bretter 105 der Nadelungseinrichtungen 103_1, 103_2 sind jeweils mit ihren mit Nadeln 106 besetzten Seiten parallel zu Flor 2 und zu einer Florführung 107 der Flor-Verfestigungsvorrichtung 100 gerichtet.

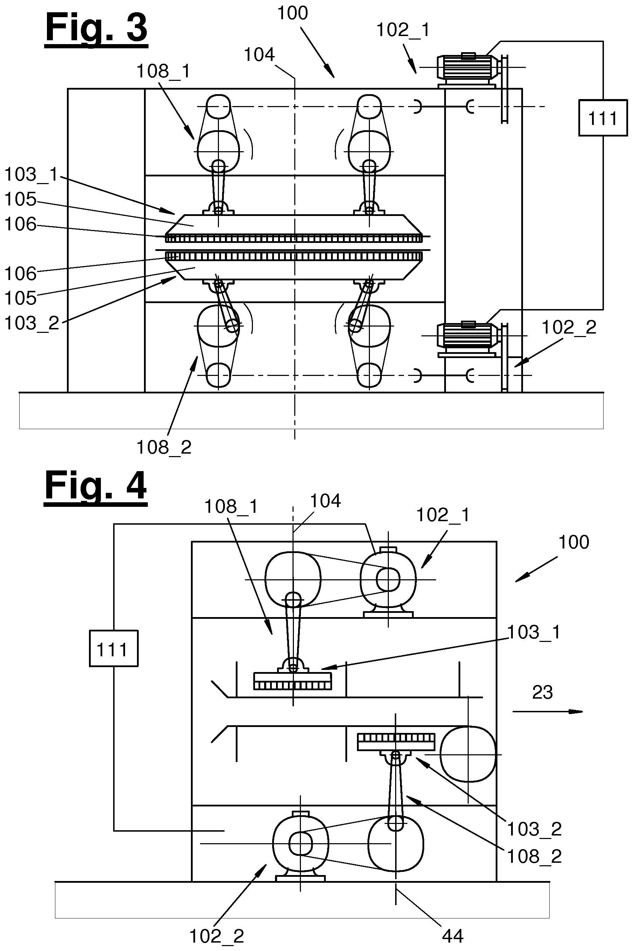

Figur 2 veranschaulicht eine detailliertere Sicht auf die Florführung 107 der Flor-Verfestigungsvorrichtung 100 gemäß einer Ausführungsform der vorliegenden Erfindung. Die Florführung 107 ist in der Ausführungsform als eine Führungsbahn für den bevorzugt bahnartigen Flor 2 ausgestaltet. Sie umfasst zwei stationäre Platten 21 und 22, zwischen denen der Flor 2 mittels einer Fördereinrichtung 24 befördert wird. Die Florbahn 2 verläuft durch den Rahmen 101 und zwischen den Nadelungseinrichtungen 103_1, 103_2 in eine vorbestimmte Richtung, die in Figur 2 mit dem Pfeil 23 angegeben ist. Während des Laufs der Florbahn 2 werden die Nadelungseinrichtungen 103_1, 103_2 derart auf und abwärts bewegt, dass die zum Flor 2 und zur Florführung 107 ausgerichteten Nadeln 106 der Bretter 105 der Nadelungseinrichtungen 103_1, 103_2 in den Flor einstechen und eine Verschlingung der Fasern im Flor 2 vornehmen. Die Nadeln 106 der oberen Nadelungseinrichtung 103_1 durchstechen die obere Platte 21 und die Nadeln 106 der unteren Nadelungseinrichtung 103_2 durchstechen die untere Platte 22 der Nadelungsbahn 107. Die Situation, in der die Nadeln 106 der oberen Nadelungseinrichtung 103_1 durch die Platte 21 durchstechen, ist in Figur 3 dargestellt.

Der Flor bzw. die Florbahn 2 besteht aus einem vorzugsweise nicht verwebten Faserverbund, insbesondere einem Non-woven mit einer bevorzugt wirren Faseranordnung oder einem Strang mit im Wesentlichen längs gerichteten Fasern. Der Flor bzw. die Florbahn 2 kann einlagig oder mehrlagig, insbesondere als gelegtes Vlies, ausgebildet sein.

Gemäß der Ausführungsform der Figur 2 umfasst die Fördereinrichtung 24 eine Antriebsrolle, die während des Betriebs der Flor-Verfestigungsvorrichtung drehend angetrieben wird und damit die Florbahn 2 in die vorbestimmte Richtung 23 laufen lässt. Die Fördereinrichtung 24 kann mehrere Antriebsrollen oder andere Fördermittel aufweisen, die vorzugsweise in Laufrichtung 23 vor und ggf. hinter den Nadelungseinrichtungen 103_1, 103_2 angeordnet sind. Die Fördereinrichtung 24 arbeitet vorzugsweise kontinuierlich und hält die Florbahn 2 unter Zug.

Die in Figur 2 dargestellte Florführung 107 kann in jeder Flor-Verfestigungsvorrichtung eingesetzt werden, die gemäß der vorliegenden Erfindung verwendet wird, insbesondere in jeder der hierin beschriebenen Flor-Verfestigungsvorrichtungen 100.

Gemäß der Ausführungsform der Figur 1 weist die Flor-Verfestigungsvorrichtung ferner zwei Antriebseinrichtungen 102_1 und 102_2 auf: eine obere Antriebseinrichtung 102_1 und eine untere Antriebseinrichtung 102_2. Die obere Antriebseinrichtung 102_1 ist an der oberen Seite des Rahmens 101 angeordnet und treibt die obere Nadelungseinrichtung 103_1 an. Die untere Antriebseinrichtung 102_2 ist an der unteren Seite des Rahmens 101 angeordnet und treibt die untere Nadelungseinrichtung 103_2 an. Die Antriebseinrichtungen 102_1 und 102_2 können beispielsweise Motoren 114, 115, insbesondere Elektromotoren oder andere Antriebe und Antriebsstränge 112, 113 sein. Damit wird jede Nadelungseinrichtung 103_1, 103_2 durch eine Antriebseinrichtung 102_1 und 102_2 angetrieben.Jede Antriebseinrichtung 102_1 und 102_2 hat einen eigenen Antrieb 114, 115 und einen eigenen Antriebsstrang 112, 113.

Das Auf- und Abwärtsbewegen eines jeden Brettes 105 einer jeden Nadelungseinrichtung 103_1, 103_2 erfolgt gemäß der Ausführungsform der Figur 1 mittels eines Vor- und Rückgangsmechanismus 108_1, 108_2. Dabei wird ein oberer Vor- und Rückgangsmechanismus 108_1 für die obere Nadelungseinrichtung 103_1 und ein unterer Vor- und Rückgangsmechanismus 108_2 für die untere Nadelungseinrichtung 103_2 verwendet. Jeder Mechanismus 108_1, 108_2 umfasst gemäß der vorliegenden Ausführungsform zwei Kurbelstangensysteme, die mit einer gemeinsamen Welle 109_1, 109_2 durch Winkelumkehrvorrichtungen 110 verbunden sind. Die zwei Kurbelstangensysteme eines Vor- und Rückgangsmechanismus 108_1, 108_2 drehen in entgegengesetzte Richtung. Dadurch können Trägheitskräfte ausgeglichen werden. Die gemeinsamen Wellen 109_1, 109_2 und die Winkelumkehrvorrichtungen 110 sind jeweils Bestandteile eines Antriebsstrangs 112, 113. Zu diesem können weitere Komponenten, z.B. ein Riementrieb für die Verbindung zum Antrieb 114, 115 etc. gehören.

Gemäß der vorliegenden Ausführungsform ist jede der gemeinsamen Wellen 109_1, 109_2, die den Vor- und Rückgangsmechanismus der entsprechenden Nadelungseinrichtung 103_1, 103_2 antreibt, mit dem entsprechenden Antrieb 114, 115 verbunden und wird von diesem angetrieben. D.h. die gemeinsame obere Welle 109_1 des oberen Antriebsstrangs 112 treibt den Vor- und Rückgangsmechanismus der oberen Nadelungseinrichtung 103_1 an, ist mit dem oberen Antrieb 114 verbunden und wird von diesem angetrieben. Die gemeinsame untere Welle 109_2 des unteren Antriebsstrangs 112 treibt den Vor- und Rückgangsmechanismus der unteren Nadelungseinrichtung 103_2 an, ist mit dem unteren Antrieb 115 verbunden und wird von diesem angetrieben. Dabei sind die gemeinsame obere und die gemeinsame untere Welle 109_1, 109_2 mechanisch voneinander unabhängig. Der Antrieb der Nadelungseinrichtungen 103_1, 103_2 durch die Antriebseinrichtungen 102_1, 102_2 ist gemäß der vorliegenden Ausführungsform als Kurbeltrieb ausgestaltet.

Figur 1 zeigt die Nadelungseinrichtungen 103_1, 103_2 in einer vom Flor 2 losgelösten Position. Die Einstiche durch die Nadeln 106 der beiden Nadelungseinrichtungen 103_1, 103_2 von der oberen und unteren Seite der Florführung 107 erfolgen gemäß der Ausführungsform der Figur 1 gleichzeitig. Dies entspricht dem Betrieb des gleichzeitigen Schlags. Ausgehend von der in Figur 1 gezeigten Position der Nadelungseinrichtungen 103_1, 103_2 befinden sich ihre Bretter 105 mit Nadeln 106 in der Position minimaler Eindringtiefe und maximaler Distanz nach einer Drehung von 180º eines jeden Kurbelstangensystems bzw. Vor- und Rückgangsmechanismus 108_1, 108_2.

Wie bereits erläutert, werden die Nadeln bei hohen Frequenzen in den Flor 2 eingestochen. Durch das Einschlagen der Nadeln 106 in den Flor 2 wird eine Schwingungs-Anregung erzeugt, die zur Beschädigung der Flor-Verfestigungsvorrichtung 100 führen kann. Um dieses zu vermeiden, weist die Flor-Verfestigungsvorrichtung gemäß der vorliegenden Ausführungsform eine Steuerungseinrichtung 111 auf, die den Betrieb der Antriebseinrichtungen 102_1, 102_2 unter Berücksichtigung von Schwingungen steuert, die am Rahmen 101 der Flor-Verfestigungsvorrichtung erfasst wurden. Hierzu ist die Steuerungseinrichtung 111 bei den Ausführungsformen von Figur 1 bis 5 mit jedem Antrieb 114, 115 der Antriebseinrichtungen 102_1, 102_2 verbunden. Die Steuerungseinrichtung 111 wertet die Daten zu den am Rahmen 101 erfassten Schwingungen aus und steuert den Betrieb der Antriebseinrichtungen 102_1, 102_2 derart, dass eine Phasenverschiebung zwischen ihnen so geändert wird, dass eine während des Betriebs der Flor-Verfestigungsvorrichtung 100 entstandene Anregungsfrequenz nicht mit der Resonanzfrequenz oder Eigenfrequenz des Rahmens 101 zusammenfällt.

Figur 3 zeigt eine weitere gemäß einer Ausführungsform der vorliegenden Erfindung ausgestaltete Flor-Verfestigungsvorrichtung 100. Die Ausgestaltung der Flor-Verfestigungsvorrichtungen der Figuren 1 und 3 stimmen im Wesentlichen überein. Dies ist u.a. anhand der gleichen Bezugszeichen in beiden Figuren verdeutlicht. Der Unterschied besteht darin, dass die Flor-Verfestigungsvorrichtung der Figur 3 nicht im Gleichschlag betrieben wird. In Figur 3 treiben die Antriebseinrichtungen 102_1, 102_2 die Nadelungseinrichtungen 103_1, 103_2 derart an, dass die Nadeln der beiden Nadelungseinrichtungen 103_1, 103_2 abwechselnd (z.B. 180° phasenverschoben), aber mit derselben Frequenz einstechen. Das mindestens eine Nadelbrett 105 der oberen Nadelungseinrichtung 103_1 sticht bei Figur 3 gerade in die Faserbahn 2 ein, während das mindestens eine Nadelbrett 105 der unteren Nadelungseinrichtung 103_2 außer Floreingriff ist. Dies ist aufgrund der dann nicht vorhandenen Kollision von Nadeln 106 auf derselben Position eine bevorzugte Betriebsart. Zudem ist das die Betriebsart, bei der die meisten Probleme mit Resonanzen auftreten.

Bei Figur 3 ist auch eine andere Variante möglich, bei der die Schlagfolge der unteren Nadelungseinrichtung 103_2 zweimal geringer als die Schlagfolge der oberen Nadelungseinrichtung 103_1 ist. Damit ergibt sich die in Figur 3 gezeigte Stellung der Nadelungseinrichtungen 103_1, 103_2 nach einer halben Umdrehung des oberen Kurbelstangensystems bzw. Vor- und Rückgangsmechanismus 108_1 und keiner Umdrehung des unteren Kurbelstangensystems bzw. Vor- und Rückgangsmechanismus 108_2. Dort befinden sich die Nadeln 106 des mindestens einen Bretts 105 der oberen Nadelungseinrichtung 103_1 in der Position maximaler Eindringtiefe. Die Nadeln 106 des mindestens einen Bretts 105 der unteren Nadelungseinrichtung 103_2 befinden sich in einer Zwischenposition.

Figur 4 zeigt eine Flor-Verfestigungsvorrichtung gemäß einer weiteren Ausführungsform der vorliegenden Erfindung. Sie unterscheidet sich von den Flor-Verfestigungsvorrichtungen der oben erläuterten Ausführungsformen dadurch, dass die Nadelungseinrichtungen 103_1, 103_2 nicht auf derselben Vertikalachse 104 wie in Figuren 1 und 3, sondern entlang zweier Vertikalachsen 104 und 44 angeordnet sind. Die Vertikalachsen 104, 44 sind zueinander entlang der Verschieberichtung 23 des Flors 2 versetzt. Die Flor-Verfestigungsvorrichtung der Figur 4 kann ansonsten genauso wie die Flor-Verfestigungsvorrichtung der Figur 1 oder wie die Flor-Verfestigungsvorrichtung der Figur 3 ausgestaltet sein. Um Wiederholungen zu vermeiden, wird deswegen auf die entsprechenden obigen Ausführungen verwiesen.

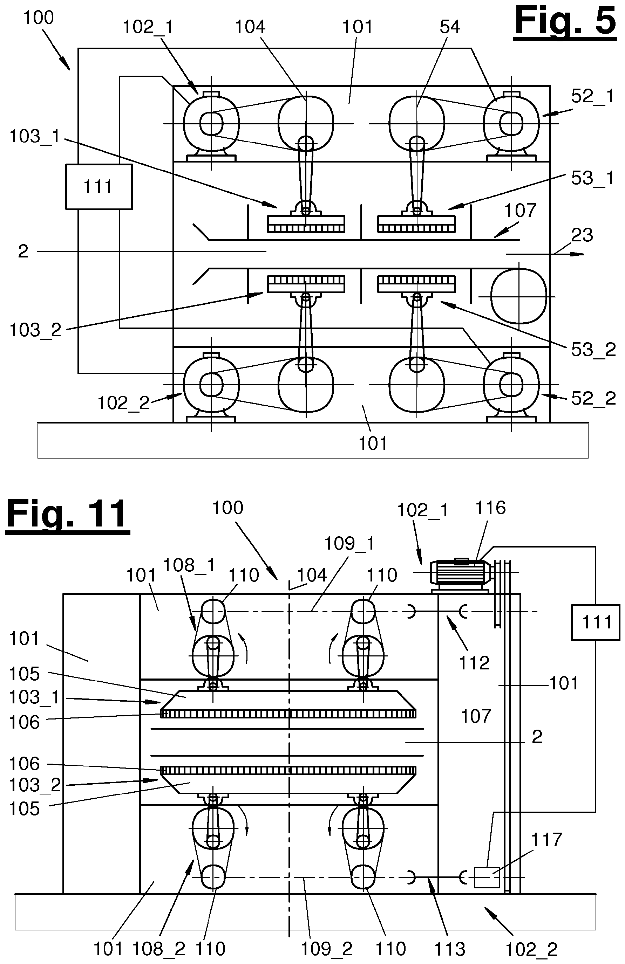

Figur 5 zeigt eine weitere Flor-Verfestigungsvorrichtung 100 gemäß einer Ausführungsform der vorliegenden Erfindung. Die Flor-Verfestigungsvorrichtung der Figur 5 weist vier Nadelungseinrichtungen 103_1, 103_2, 53_1, 53_2 auf: zwei obere Nadelungseinrichtungen 103_1, 53_1 und zwei untere Nadelungseinrichtungen 103_2, 53_2. Ferner weist die Flor-Verfestigungsvorrichtung der Figur 5 vier Antriebseinrichtungen 102_1, 102_2, 51_1, 51_2 auf: zwei obere Antriebseinrichtungen 102_1, 52_1 und zwei untere Antriebseinrichtungen 102_2, 52_2. Jede der Nadelungseinrichtungen 103_1, 103_2, 53_1, 53_2 ist mit einer Antriebseinrichtung 102_1, 102_2, 51_1, 51_2 verbunden und umgekehrt. D.h. jede Nadelungseinrichtung 103_1, 103_2, 53_1, 53_2 wird von einer nur auf diese Nadelungseinrichtung eingestellte Antriebseinrichtung 102_1, 102_2, 51_1, 51_2 angetrieben. Gemäß der Ausführungsform der Figur 5 sind die oberen und unteren Nadelungseinrichtungen 103_1, 103_2, 53_1, 53_2 paarweise angeordnet. Dabei sind die Nadelungseinrichtungen 103_1, 103_2 auf derselben Vertikalachse 104 angeordnet, und die Nadelungseinrichtungen 53_1, 53_2 sind auf derselben Vertikalachse 54 angeordnet. Die Vertikalachse 54 ist im Hinblick auf die Vertikalachse 104 in die Verschieberichtung 23 des Flors 2 versetzt.

Die Steuerungseinrichtung 111 ist gemäß der Ausführungsform der Figur 5 mit jedem Antrieb 114, 115 der Antriebseinrichtungen 102_1, 102_2, 51_1, 51_2 (elektrisch) verbunden und steuert den Betrieb jeder der Antriebseinrichtungen 102_1, 102_2, 51_1, 51_2. Die Flor-Verfestigungsvorrichtungen der Figuren 1 und 5 unterscheiden sich lediglich in der Anzahl der Nadelungseinrichtungen und der Antriebseinrichtungen. Die Ausgestaltung der Einrichtungen und anderer dazugehörigen Komponenten kann in beiden Figuren gleich oder zumindest im Wesentlichen ähnlich sein. Anzumerken ist, dass die Nadelungseinrichtungen 103_1, 103_2, 53_1, 53_2 der Ausführungsform der Figur 5 und der anderen Ausführungsbeispiele nicht zwingend im Gleichschlag arbeiten müssen. Je zwei Nadelungseinrichtungen 103_1, 103_2, 53_1, 53_2 können mit verschiedenen Phasenverschiebungen betrieben werden.

Figur 11 zeigt eine weitere Ausführungsform der Flor-Verfestigungsvorrichtung 100, die auf der Variante von Figur 1 beruht, die aber auch bei den Konstruktionen der anderen Ausführungsbeispiele von Figur 2 bis 5 eingesetzt werden kann. Die obere Antriebseinrichtung 102_1 und die untere Antriebseinrichtung 102_2 haben in der Variante von Figur 11 einen gemeinsamen Antrieb 116 und besitzen jeweils einen hieran angeschlossenen eigenen Antriebsstrang 112, 113. Der gemeinsame Antriebsmotor 116 treibt beide Antriebsstränge 112, 113 gemeinsam an. Im Bereich von zumindest einem Antriebsstrang ist eine Einstellvorrichtung 117 angeordnet, die mit der Steuerungseinrichtung 111 verbunden ist und mit der eine Phasenverschiebung bzw. Phasenverstimmung zwischen der oberen und unteren Antriebseinrichtung 102_1, 102_2 bedarfsweise eingestellt werden kann. Die Einstellvorrichtung 117 befindet sich zum Beispiel im Bereich des unteren Antriebsstrangs 113. Sie kann alternativ im Bereich des oberen Antriebsstrangs 112 oder im Bereich von beiden Antriebssträngen 112, 113 angeordnet sein.

Die Einstellvorrichtung 117 kann in unterschiedlicher Weise ausgebildet und angeordnet sein. In Figur 11 ist sie z.B. als während des Betriebs steuerbare Wellenkupplung ausgebildet und an der unteren gemeinsamen Welle 109_2 angeordnet. Alternativ kann die Einstellvorrichtung 117 als während des Betriebs verstellbares oder schaltbares Getriebe, z.B. Shiftgetriebe, ausgebildet sein. Die Einstellvorrichtung 117 kann in weiterer Abwandlung an einer Schnittstelle zwischen dem gemeinsamen Antrieb 116 und den beiden Antriebssträngen 112, 113 oder an anderer geeigneter Stelle angeordnet sein.

Eine Gemeinsamkeit zwischen allen Flor-Verfestigungsvorrichtungen der verschiedenen Ausführungsformen der vorliegenden Erfindung stellt die Steuerungseinrichtung 111 dar, welche den Betrieb der Antriebseinrichtungen (z.B. 102_1, 102_2, 51_1, 51_2) einer Flor-Verfestigungsvorrichtung 100 steuert. Die Steuerung des Betriebs der mindestens zwei Antriebseinrichtungen kann in der vorbeschriebenen Weise durch Steuerung der besagten eigenen Antriebe 114, 115 oder zumindest eines eigenen Antriebsstrangs 112, 113 durch die Einstellvorrichtung 117 erfolgen.

Dabei ist die Steuerungseinrichtung 111 derart ausgestaltet, dass sie beim Betreiben der Antriebseinrichtungen Schwingungen bzw. Daten zu Schwingungen berücksichtigt, die am Rahmen (z.B. 101) einer Flor-Verfestigungsvorrichtung 100 auftreten. Auf diese Weise hat die Steuerungseinrichtung 111 neben dem Betreiben der Antriebseinrichtungen auch die Funktion des Schutzes der Flor-Verfestigungsvorrichtung 100 vor zu hohen Schwingungen und damit auch zu hohen Schwingungs-Anregungen inne.

Da jede der Antriebseinrichtungen (z.B. 102_1, 102_2, 51_1, 51_2) jeweils eine Nadelungseinrichtung (z.B. 103_1, 103_2, 53_1, 53_2) betreibt, steuert die Steuerungseinrichtung 111 auch den Betrieb einer jeden einzelnen Nadelungseinrichtung (z.B. 103_1, 103_2, 53_1, 53_2) der Flor-Verfestigungsvorrichtung. Dadurch kann die Steuerungseinrichtung 111 beim Betrieb der Antriebseinrichtungen und der Nadelungseinrichtungen auf die einzelnen Anregungen, die durch den Einschlag der Nadeln der Nadelungseinrichtungen entstehen, reagieren. Der Betrieb der Antriebseinrichtungen und damit auch der Nadelungseinrichtungen wird gemäß einiger Ausführungsformen der vorliegenden Erfindung z.B. durch das Anpassen der (Zyklus-) Phasenverschiebungen zwischen den einzelnen Antriebseinrichtungen gesteuert. Das Anpassen der Phasenverschiebung wird unter Verwendung von Daten zu Schwingungen vorgenommen, die z.B. am Rahmen (z.B. 101) der Flor-Verfestigungsvorrichtung im Produktionsbetrieb unmittelbar erfasst wurden.

Gemäß einiger Ausführungsformen der vorliegenden Erfindung ändert die Steuerungseinrichtung 111 eine Phasenverschiebung zwischen zwei oder mehr Antriebseinrichtungen derart, dass eine durch das Antreiben der Nadelungseinrichtungen entstandene Anregungsfrequenz und die Resonanzfrequenz des Rahmens nicht zusammenfallen. Gemäß einiger Ausführungsformen der vorliegenden Erfindung ändert die Steuerungseinrichtung 111 die Phasenverschiebung zwischen zwei oder mehr Antriebseinrichtungen dann, wenn die Daten zu den am Rahmen erfassten Schwingungen anzeigen, dass die entstandene Schwingungs-Anregung zu Schäden an der Flor-Verfestigungsvorrichtung führen kann. Dies wäre zum Beispiel dann der Fall, wenn durch die Daten zu den erfassten Schwingungen bei einer Maschineneinstellung ersichtlich wird, dass sich die Anregungsfrequenz und die Resonanzfrequenz des Rahmens zu stark nähern.

Die Steuerungseinrichtung 111 ist gemäß einer Ausführungsform ausgestaltet, die vorzunehmende Phasenverschiebung selbsttätig oder automatisch zu bestimmen. Gemäß einer anderen Ausführungsform ist die Steuereinrichtung 11 ausgestaltet, Daten zu der vorzunehmenden Phasenverschiebung zu empfangen. In der letzteren Ausführungsform wird die Phasenverschiebung von einer anderen Einrichtung bestimmt und der Steuereinrichtung 11 bereitgestellt. Die Daten können in der letzteren Ausführungsform auch manuell eingegeben werden. Dies kann an der Steuerungseinrichtung 111 direkt oder indirekt über entsprechende Eingabeeinrichtung(en) vorgenommen werden, die dann die Eingabe (-Daten) der Steuerungseinrichtung 111 überträgt (übertragen).

Durch die Phasenverschiebung zweier Antriebsvorrichtungen wird die Anregung, die durch die entsprechenden Nadelungseinrichtungen erzeugt wurde, beeinflusst. Die zwei Antriebsvorrichtungen können Nadelungseinrichtungen antreiben, die an zwei gegenüberliegenden Seiten des Rahmens (z.B. 101) einer Flor-Verfestigungsvorrichtung angeordnet sind; z.B. Nadelungseinrichtungen 103_1 und 103_2 und/oder Nadelungseinrichtungen 53_1, 53_2.

Üblicher Weise ist die Phasenverschiebung zwischen zwei Nadelungseinrichtungen und dementsprechend auch zwischen zwei Antriebseinrichtungen voreingestellt. Siehe z.B. die obigen Ausführungen zur Figur 1, in der der Standardwert 180° ist, und die obigen Ausführungen zur Figur 3 und dem dortigen Antrieb der Nadelungseinrichtungen 103_1 und 103_2. Durch ein Abändern der Phasenverschiebung von dem voreingestellten Wert (z.B. 180°) kann die durch die Nadelungseinrichtungen erzeugte kritische Anregung (z.B. Anregung der 4. und der 5. Ordnung) nahezu beliebig variiert werden, und der kritische Drehzahlbereich kann verschoben werden.

Die Steuerungseinrichtung 111 kann bei Bedarf und in Reaktion auf die Anregungen, die durch den Einschlag der Nadeln 106 am Flor 2 entstehen, die Antriebseinrichtungen zusätzlich zur Phasenverschiebung bzw. Phasenverstimmung in anderer Weise steuern. Für das Vernadeln der unterschiedlichen Flor 2 können jeweils geeignete und unterschiedliche Einschlag- oder Hubfrequenzen der Nadeleinrichtungen als Soll-Werte vorgesehen sein. Sie können mittels der Steuereinrichtung 111 über eine Ansteuerung der eigenen Antriebsmotoren 114, 114 oder des gemeinsamen Antriebsmotors 116 eingestellt werden. Diese Einschlag- oder Hubfrequenzen können ebenfalls verstellt und durch die Steuereinrichtung 111 bedarfsweise gegenüber dem florspezifischen Soll-Wert verändert werden. Dies kann z.B. geschehen, falls die Phasenverschiebung bzw. Phasenverstimmung als alleinige Steuermaßnahme nicht ausreicht oder aus prozesstechnischen Gründen, z.B. wegen der Vernadelungsqualität etc., begrenzt ist.

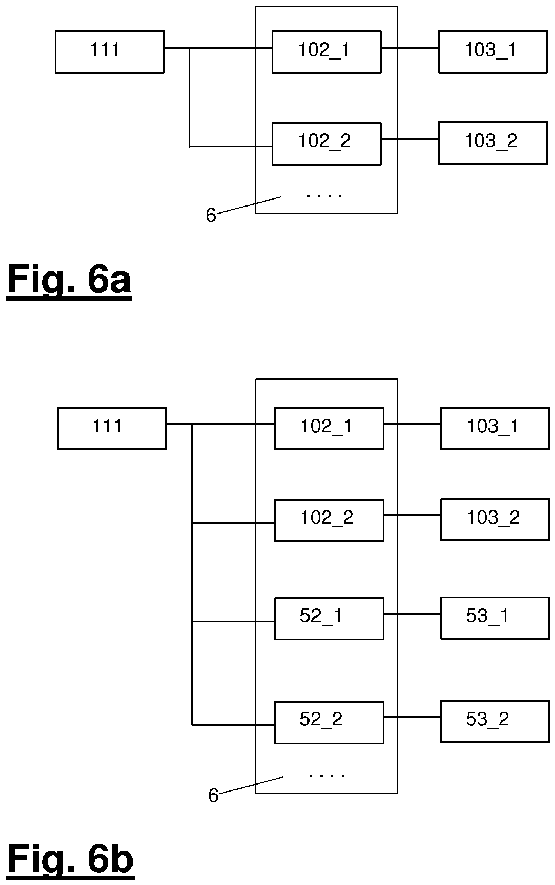

Figuren 6a und 6b zeigen beispielhaft die Steuerungseinrichtung 111 gemäß einiger Ausführungsformen der vorliegenden Erfindung, die den Betrieb von Antriebseinrichtungen 102_1, 102_2 einer Flor-Verfestigungsvorrichtung 100 steuert. Die Steuerungseinrichtung 111 steuert den Betrieb wie oben beschrieben. Dazu ist sie mit einem Satz 6 von Antriebseinrichtungen einer Flor-Verfestigungsvorrichtung verbunden. Gemäß einer Ausführungsform sind die Verbindungen elektronische Verbindungen, wodurch dynamische, flexible und gezielte Phasenverschiebungsänderungen vorgenommen werden können und wodurch ein verbessertes und zuverlässiges Ändern einer gegebenen (z.B. voreingestellten) Phasenverschiebung ausgeführt werden kann.

Der Satz 6 von Antriebseinrichtungen umfasst mindestens zwei Antriebsvorrichtungen. Diese können beispielsweise die oben beschriebenen Antriebsvorrichtungen 102_1, 102_2 (Figur 6a) oder die oben beschriebenen Antriebsvorrichtungen 102_1, 102_2, 51_1, 51_2 (Figur 6b) sein. Die vorliegende Erfindung ist aber nicht auf diese beschränkt.

Gemäß einer Ausführungsform der vorliegenden Erfindung kann die Steuerungseinrichtung 111 ausgestaltet sein, ein Warnsignal zu senden, wenn die Daten zu den am Rahmen erfassten Schwingungen anzeigen, dass die entstandene Schwingungs-Anregung zu Schäden an der Flor-Verfestigungsvorrichtung führen kann. Diese Gefahr bestünde z.B., wie oben dargelegt, dann, wenn durch eine Auswertung der Daten zu den erfassten Schwingungen ersichtlich wird, dass sich die Anregungsfrequenz und die Resonanzfrequenz des Rahmens zu stark nähern. Dadurch wird dem die Flor-Verfestigungsvorrichtung bedienenden Personal bzw. Fachmann signalisiert, dass kritische Schwingungen durch den Betrieb der Flor-Verfestigungsvorrichtung aufgetreten sind. Das Personal bzw. der Fachmann kann sodann alternativ oder zusätzlich zu der oben beschriebenen Steuerung durch die Steuerungseinrichtung 111 eingreifen und entsprechende die Flor-Verfestigungsvorrichtung schützende Schritte einleiten. Gegebenenfalls können durch die Steuerungseinrichtung 111 vorgenommenen Phasenverschiebungsänderungen überprüft werden.

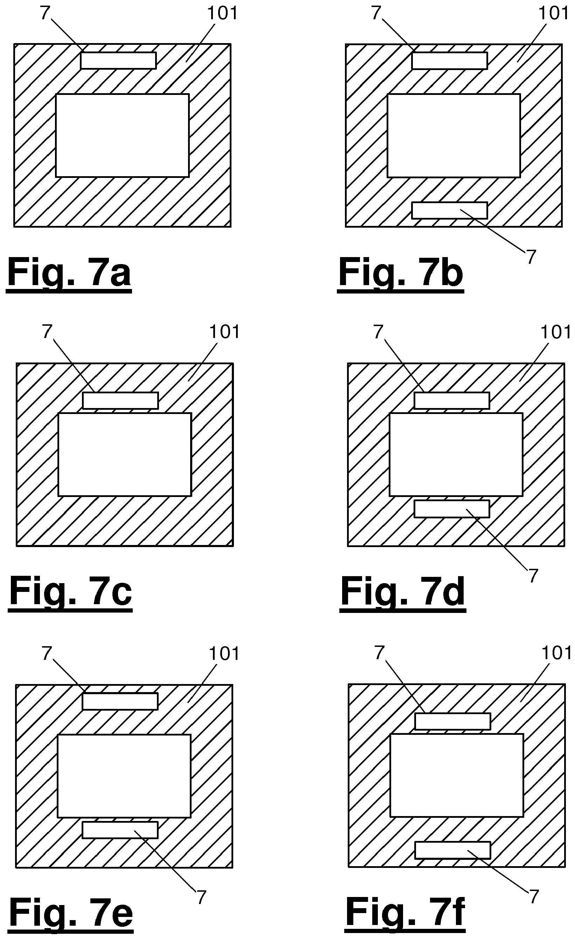

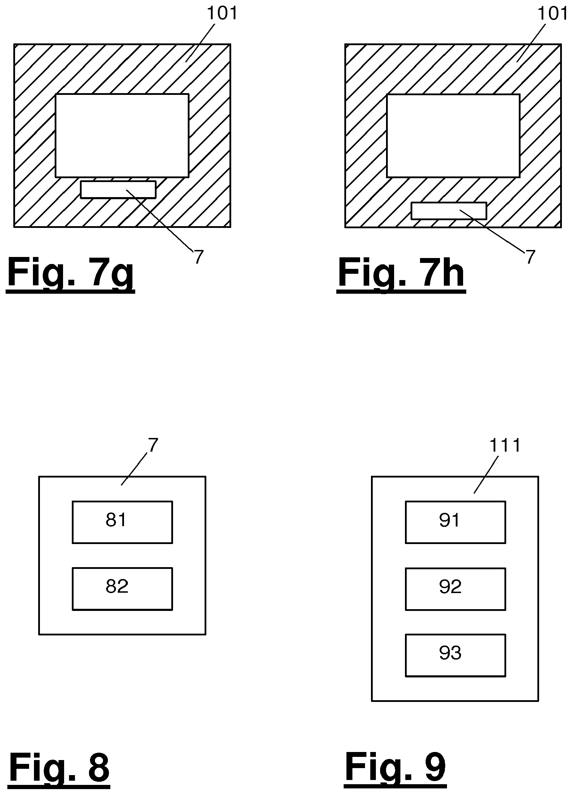

Zum Erfassen von Schwingungen am Rahmen 101 einer Flor-Verfestigungsvorrichtung 100, d.h. zum Gewinnen von Daten zu den Schwingungen weist die Flor-Verfestigungsvorrichtung, wie oben beschrieben, mindestens eine Schwingungs-Erfassungseinrichtung 7 auf. Dies ist beispielhaft in den Figuren 7a bis 7h gezeigt, wobei diese Beispiele nicht abschließend sind. Die Schwingungs-Erfassungseinrichtung 7 ist gemäß den Ausführungsformen der Figuren 7a bis 7h am Rahmen 101 der Flor-Verfestigungsvorrichtung angeordnet und ist ausgestaltet, Schwingungen am Rahmen 101 z.B. unmittelbar zu erfassen.

Es gibt verschiedene Möglichkeiten, eine Schwingungs-Erfassungseinrichtung 7 am Rahmen 101 der Flor-Verfestigungsvorrichtung 100 anzuordnen. So kann eine Schwingungs-Erfassungseinrichtung 7 an der oberen und/oder an der unteren Seite des Rahmens 101 angeordnet sein. An diesen Positionen ist zu erwarten, dass die Schwingungs-Erfassungseinrichtung 7 die durch die Nadelungseinrichtungen erzeugten Schwingungen am besten und genauesten erfassen werden wird. Die Nadelungseinrichtung(en) ist (sind) an der oberen und/oder an der unteren Seite des Rahmens 101 angeordnet und übertragen die durch die Nadelungseinrichtungen entstandenen Schwingungen zuerst an diese zwei Seiten des Rahmens 101. An einer (oberen und unteren) Seite des Rahmens 101 kann die Schwingungs-Erfassungseinrichtung 7 beispielsweise entweder im oberen oder im unteren Teil des Rahmens 101 angeordnet sein. Sie kann dabei beispielsweise mittig positioniert sein. Die Platzierung der Schwingungs-Erfassungseinrichtung 7 richtet sich im Wesentlichen nach dem Ort im Rahmen, an dem die Schwingungen zuerst antreffen und/oder am genauesten zu erfassen sind.

Figur 8 zeigt eine Schwingungs-Erfassungseinrichtung 7 gemäß einer Ausführungsform der vorliegenden Erfindung, die, wie oben beschrieben, in jeder erfindungsgemäß ausgestalteten Flor-Verfestigungsvorrichtung verwendet werden kann. Gemäß der vorliegenden Ausführungsform umfasst die Schwingungs-Erfassungseinrichtung 7 eine Schwingungs-Erfassungseinheit 81, die zum Erfassen der Schwingungen ausgestaltet ist, die beim Betrieb der Nadelungseinrichtungen der Flor-Verfestigungseinrichtung entstehen. Gemäß einer Ausführungsform ist die Schwingungs-Erfassungseinrichtung 7 bzw. deren Schwingungs-Erfassungseinheit 81 ein Beschleunigungssensor. Die Schwingungs-Erfassungseinrichtung 7 bzw. deren Schwingungs-Erfassungseinheit 81 kann auch ein anderer Schwingungssensor sein oder einen solchen Schwingungssensor aufweisen.

Die Schwingungserfassungseinrichtung 7 bzw. deren Schwingungs-Erfassungseinheit 81 wird vorzugsweise an einem Ort der Flor-Verfestigungseinrichtung 100 angeordnet, an dem die meisten Schwingungen auftreten und/oder an dem die Schwingungen am besten (in ihrer Gesamtheit) zu erfassen sind. Gemäß einigen weiteren Ausbildungen wird die Schwingungs-Erfassungseinrichtung 7 bzw. deren Schwingungs-Erfassungseinheit 81 am Rahmen 101 der Flor-Verfestigungsvorrichtung angeordnet.

Des Weiteren weist die Schwingungs-Erfassungseinrichtung 7 eine Kommunikationseinheit 82 auf, die die Daten zu den erfassten Schwingungen an die Steuerungseinrichtung 111 der Flor-Verfestigungsvorrichtung 100 überträgt. Die Schwingungs-Erfassungseinrichtung 7 kann die Schwingungen (unter Verwendung der Schwingungs-Erfassungseinheit 81) unaufgefordert, z.B. periodisch erfassen und (unter Verwendung der Kommunikationseinheit 82) an die Steuerungseinrichtung 111 übertragen. Alternativ oder zusätzlich kann die Schwingungs-Erfassungseinrichtung 7 bzw. ihre Kommunikationseinheit 82 von der Steuerungseinrichtung 111 eine Aufforderung empfangen, die Erfassung von Schwingungen vorzunehmen.

Figur 9 zeigt eine beispielhafte Ausgestaltung der oben beschriebenen Steuerungseinrichtung 111 gemäß einer Ausführungsform der vorliegenden Erfindung. Gemäß der vorliegenden Ausführungsform weist die Steuerungseinrichtung 111 eine Kommunikationseinheit 91 auf, die ausgestaltet ist, Daten zu den durch den Betrieb der Flor-Verfestigungsvorrichtung entstandenen und erfassten Schwingungen zu empfangen. Wie bereits erwähnt, wird das Erfassen der Schwingungen in einigen Ausführungsformen am Rahmen 101 der Flor-Verfestigungsvorrichtung vorgenommen. Die Steuerungseinrichtung 111 kann die Kommunikationseinheit 91 auch verwenden, um Aufforderungen an die Schwingungs-Erfassungseinrichtung 7 zu senden, damit die Schwingungs-Erfassungseinrichtung 7 die durch den Betrieb der Flor-Verfestigungsvorrichtung entstandenen Schwingungen misst.

Gemäß der vorliegenden Ausführungsform weist die Steuerungseinrichtung 111 eine Verarbeitungseinheit 92 auf. Gemäß der vorliegenden Ausführungsform ist die Verarbeitungseinheit 92 ausgestaltet, die Daten zu den erfassten Schwingungen auszuwerten und gegebenenfalls eine oder mehrere Phasenverschiebungen zwischen zwei oder mehreren Antriebseinrichtungen (z.B. 102_1, 102_2, 52_1, 52_2) anzuweisen, wie bereits oben beschrieben.

Hierzu ist die Verarbeitungseinheit 92 gemäß einer Ausführungsform ausgestaltet, die vorzunehmende Phasenverschiebung selbsttätig bzw. automatisch zu bestimmen. Gemäß einer anderen Ausführungsform ist die Verarbeitungseinheit 92 ausgestaltet, eine Eingabe zu erfassen, die Angaben zu der vorzunehmenden Phasenverschiebung aufweist.

Im letzteren Fall werden die Daten zu den erfassten Schwingungen angezeigt. Dies kann beispielsweise akustisch und/oder visuell erfolgen. Gemäß einer Ausführungsform wird das Anzeigen der erfassten Schwingungen von der Steuerungseinrichtung 111 selbst vorgenommen. Gemäß einer anderen Ausführungsform wird das Anzeigen von einer anderen, hierzu ausgestalteten Einrichtung/Vorrichtung ausgeführt; die Steuerungseinrichtung 111 kann in diesem Fall entsprechende Daten zu den erfassten Schwingungen der zum Anzeigen ausgestaltete Einrichtung bereitstellen (z.B. mittels einer Datenübertragung durch die Kommunikationseinheit 91). In Erwiderung auf die Anzeige der Daten zu den erfassten Schwingungen, kann die Steuerungseinrichtung 111 eine entsprechende Eingabe zu der vorzunehmenden Phasenverschiebung erhalten. Die Eingabe kann unter Verwendung der Steuerungseinrichtung 111 selbst oder unter Verwendung einer weiteren zur Eingabe ausgestalteten Einrichtung erfolgen. Die Eingabe kann auch von einem Bediener manuell vorgenommen werden. Eine automatische Eingabe kann ferner von einem Bediener bedarfsweise manuell verändert werden.

Wurde bestimmt, dass eine oder mehrere Phasenverschiebungen zu ändern sind, übermittelt die Steuerungseinrichtung 111 entsprechende Daten an die Antriebseinrichtungen der Flor-Verfestigungsvorrichtung. Diese Daten können Anweisungen zum Ändern einer Phase um einen bestimmten Betrag umfassen. Ferner können die Daten zu den Änderungen der einen oder der mehreren vorzunehmenden Phasenverschiebungen und ggf. der Hubfrequenz mittels der Kommunikationseinheit 91 an die entsprechenden Antriebseinrichtungen übertragen werden. Zusätzlich weist die Steuerungseinrichtung 111 gemäß der vorliegenden Ausführungsform eine Warnanzeigeeinheit 93 auf, die ausgestaltet ist, ein Warnsignal zu senden, wenn die Steuerungseinrichtung 111 bzw. ihre Verarbeitungseinheit 92 durch Auswerten der Daten zu den erfassten Schwingungen bestimmt, dass die Schwingungen zu Schädigungen der Flor-Verfestigungsvorrichtung führen könnten. Dieses Warnsignal kann verschiedenartig ausgestaltet sein. Es kann beispielsweise ein akustisches Signal, ein visuelles Signal und/oder ein Datensignal, das z.B. an eine zentrale Steuerung oder eine andere Einheit übertragen wird, sein.

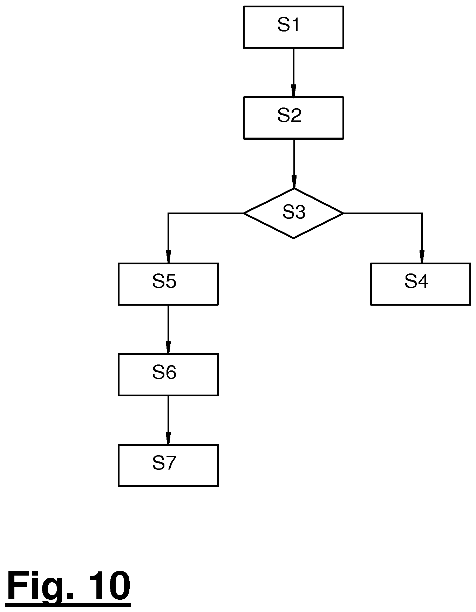

Figur 10 zeigt die Schritte eines Verfahrens zum Betrieb von mindestens zwei Antriebseinrichtungen einer Flor-Verfestigungsvorrichtung gemäß einer Ausführungsform der vorliegenden Erfindung. Die Schritte des Verfahrens werden insbesondere wie oben erläutert ausgeführt.

In Schritt S1 werden die Schwingungen erfasst, die durch den Betrieb der Flor-Verfestigungsvorrichtung entstehen. Die Schwingungen werden gemäß einigen Ausführungsformen am Rahmen (z.B. 101) der Flor-Verfestigungsvorrichtung erfasst. Dies kann beispielsweise mittels der mindestens einen oben beschriebenen Schwingungs-Erfassungseinrichtung 7 erfolgen. Die erfassten Daten werden in Schritt S2 an die Steuerungseinrichtung 111 übermittelt Die Steuerungseinrichtung 111 prüft in Schritt S3, wie oben beschrieben, ob die Schwingungen zu Schäden an der Flor-Verfestigungsvorrichtung führen können, insbesondere ob die durch den Antrieb der Nadelungseinrichtungen erzeugten Schwingungs-Anregungen kritisch sind (siehe die obigen Ausführungen hierzu). Ergibt die Prüfung in Schritt S3, dass die Schwingungen nicht zu Schäden an der Flor-Verfestigungsvorrichtung führen können, wird in Schritt S4 der Betrieb der Ansteuerungseinrichtungen und damit auch die Ansteuerung der Nadelungseinrichtungen unverändert fortgesetzt. Anderenfalls ändert in Schritt S5 die Steuerungseinrichtung 111 die bestehende oder aktuelle Phasenverschiebung zwischen zumindest zwei Antriebseinrichtungen und damit auch zwischen den entsprechenden zumindest zwei Nadelungseinrichtungen wie oben beschrieben.

Alternativ oder zusätzlich kann die Steuerungseinrichtung 111 in Schritt S5 auch ein Warnsignal wie oben beschrieben ausgeben bzw. anzeigen. In Schritt S6 überträgt die Steuerungseinrichtung 111 die Daten oder Anweisungen zu den vorzunehmenden Phasenverschiebungsänderungen an die entsprechenden Antriebseinrichtungen. In Schritt S7 nehmen die Antriebseinrichtungen die angewiesenen Phasenverschiebungsänderungen vor bzw. setzten diese um und treiben die Nadelungseinrichtungen gemäß den neuen bzw. geänderten Phasenverschiebungsänderungen an.

In den vorgenannten Ausführungsbeispielen ist die Schwingungs-Erfassungseinrichtung 7 im Produktions- bzw. Prozessbetrieb an der Flor-Verfestigungseinrichtung 100 angeordnet und in Funktion. Sie nimmt die im Produktionsbetrieb durch die Nadeleinstichkräfte auftretenden Schwingungen auf. Sie kann auch bei der Einrichtung der Flor- Verfestigungsvorrichtung 100 oder bei deren Umstellung auf einen anderen Flor 2 eingesetzt werden. Die auftretenden Schwingungen werden unmittelbar erfasst und zu Steuerzwecken ausgewertet und benutzt.

In einer anderen und nicht dargestellten Ausführungsform können die Schwingungen in der vorgenannten Weise indirekt erfasst werden mittels einer sensorischen Detektion der Hubfrequenz und einer Abfrage von einer Zuordnung, insbesondere einem Kennfeld, zur Ermittlung der zugehörigen Anregungsschwingung. Die Schwingungs-Erfassungseinrichtung 7 führt bei dieser Variante eine Erfassung der Hubfrequenz und eine Abfrage der Zuordnung bzw. des Kennfelds durch. Sie kann hierfür als separate Einrichtung ausgebildet sein und kann auch einen Sensor zum Erfassen der Hubfrequenz und einen Speicher für die Zuordnung bzw. das Kennfeld aufweisen. Die Schwingungs-Erfassungseinrichtung 7 kann alternativ in eine andere Komponente der Flor-Verfestigungsvorrichtung 100, insbesondere in deren Steuerungseinrichtung 111, implementiert sein.

Die sensorische Erfassung der Hubfrequenz kann in der vorerwähnten Weise durch einen entsprechenden Sensor zur direkten Detektion oder durch einen meist ohnehin vorhandenen Drehzahlgeber an zumindest einen Antrieb 114,115,116 indirekt erfolgen und an die Steuerungseinrichtung 111 bzw. eine separate Schwingungs-Erfassungseinrichtung 7 gemeldet werden. Die Erstellung der Zuordnung bzw. des Kennfelds, z.B. in Form einer Technologie-Datenbank, kann vorab beim Hersteller oder beim Betreiber der Flor-Verfestigungsvorrichtung 100 erfolgen. Hierbei werden die Antriebseinrichtungen mit unterschiedlichen Drehzahlen bzw. Hubfrequenzen betrieben und die jeweils zugehörigen und von den Nadelkräften angeregten Schwingungen in geeigneter Weise aufgenommen, z.B. durch einen oder mehrere der vorgenannten und gegebenenfalls temporär verwendeten Schwingungssensoren, insbesondere Beschleunigungssensoren.

Bei dem vorgenannten Ausführungsbeispiel wird die durch die Nadelkräfte induzierte Anregungsfrequenz bzw. deren Frequenzspektrum aufgenommen und mit einer oder mehreren Resonanzfrequenzen der Flor-Verfestigungsvorrichtung 100 verglichen. Alternativ oder zusätzlich können die Amplituden der durch die Nadelkräfte angeregten Schwingungen erfasst und mit einem Amplituden-Grenzwert, verglichen werden, der für eine oder mehrere der Resonanzfrequenzen repräsentativ ist. Der Grenzwert befindet sich im Bereich und an oder bevorzugt nahe an der oder den besagten Resonanzfrequenzen und definiert eine Schwelle, die im Produktions- und Prozessbetrieb nicht überschritten werden sollte.

Die vorgenannten Daten zu den durch Antreiben der Nadelungseinrichtung entstehenden Schwingungen können in der vorerwähnten Weise die Anregungsfrequenz und ggf., wenn auch nicht notwendigerweise, eine Resonanzfrequenz der Florverfestigungseinrichtung 100 sowie alternativ oder zusätzlich die durch Antreiben der Nadelungseinrichtung entstehende Schwingungsamplitude und den besagten Amplituden-Grenzwert anzeigen. Diese Anzeige kann durch Meldung an die Steuerungseinrichtung 111 und/oder durch eine optische oder andersartige Anzeige an einen Bediener erfolgen.

Die vorgenannte Erfassung einer Schwingungsamplitude und eines Grenzwerts kann ebenfalls direkt oder indirekt erfolgen. Die besagte Zuordnung bzw. das Kennfeld kann zusätzlich oder alternativ zu den angeregten Schwingungsfrequenzen deren Amplituden und als Repräsentant für die Resonanz den Amplituden-Grenzwert beinhalten. Diese Varianten der Schwingungs-Erfassung können mit allen vorgenannten Ausführungsbeispielen von Figur 1 bis 5 und 11 für die Florverfestigungseinrichtung 100 kombiniert werden.

In weiterer Abwandlung dieser Ausführungsbeispiele von Figur 1 bis 5 und 11 kann ein Nadelbrett 105 mehrteilig und segmentiert ausgebildet sein. Die Segmentierung kann über die Arbeitsbreite quer zur Laufrichtung 23 und/oder in Laufrichtung 23 bestehen.

Beim Ausführungsbeispiel von Figur 5 werden die oberen Nadelungseinrichtungen 53_1, 103_1 synchron und phasengleich bewegt. Auch die unteren Nadelungseinrichtungen 53_2, 103_2 werden synchron und phasengleich bewegt. Eine Phasenverschiebung bzw. Phasenverstimmung wird bevorzugt zwischen den oberen und den unteren Nadelungseinrichtungen eingestellt. Alternativ oder zusätzlich kann eine Phasenverstellung bzw. Phasenverstimmung bei den jeweils auf der gleichen Seite der Florbahn 2 befindlichen Nadelungseinrichtungen erfolgen. Diese Phasenverstimmung kann z.B. das Phasenverhältnis der oberen Nadelungseinrichtungen 53_1, 103_1 untereinander und/oder das Phasenverhältnis der unteren Nadelungseinrichtungen 53_3, 103_2 untereinander betreffen. Eine Phasenverschiebung oder Phasenverstimmung der jeweils auf der gleichen Florseite gelegenen Nadelungseinrichtungen kann auch die vorgenannten Segmente eines geteilten Nadelbalkens 105 betreffen, wenn diese jeweils einzeln oder gruppenweise mit einer Antriebseinrichtung verbunden sind. Bevorzugt wird allerdings die zu den dargestellten Ausführungsbeispielen beschriebene Phasenverschiebung bzw. Phasenverstimmung zwischen oberen und unteren Nadelungseinrichtungen.

Wie oben dargestellt, betrifft die vorliegende Erfindung eine Flor-Verfestigungsvorrichtung, die zum Verfestigen von Flor ausgestaltet ist und die aufweist: mindestens zwei Antriebseinrichtungen, von denen jede ausgestaltet ist, zumindest eine Nadelungseinrichtung der Flor-Verfestigungsvorrichtung anzutreiben, wobei jede Nadelungseinrichtung zum Verfestigen von Flor ausgestaltet ist und von einer der mindestens zwei Antriebseinrichtungen angetrieben wird; mindestens eine Schwingungs-Erfassungseinrichtung, die ausgestaltet ist, Daten zu Schwingungen zu erfassen, wobei die Schwingungen solche Schwingungen umfassen, die durch den Betrieb der Nadelungseinrichtungen entstehen; und eine Steuerungseinrichtung, die ausgestaltet ist, die von der Schwingungs-Erfassungsvorrichtung erfassten Daten zu Schwingungen zu empfangen und den Betrieb der mindestens zwei Antriebseinrichtungen in Erwiderung auf das Empfangen der Daten zu Schwingungen zu steuern.

Zusätzlich betrifft die vorliegende Erfindung die Steuerungseinrichtung, die zum Betrieb von mindestens zwei Antriebseinrichtungen der Flor-Verfestigungsvorrichtung ausgestaltet ist, und ein Verfahren zum Betrieb der mindestens zwei Antriebseinrichtungen der Flor-Verfestigungsvorrichtung.

Obwohl die Erfindung oben mit Bezug auf die Ausführungsformen gemäß der beiliegenden Zeichnungen erklärt wird, ist es ersichtlich, dass die Erfindung nicht auf diese beschränkt ist, sondern innerhalb des Bereichs der in anhängigen Ansprüchen offenbarten erfinderischen Idee modifiziert werden kann. Es versteht sich von selbst, dass es noch weitere Ausführungsformen geben kann, die den Grundsatz der Erfindung darstellen und die äquivalent sind, und dass somit verschiedene Modifikationen ohne Abweichen vom Umfang der Erfindung implementiert werden können.

### BEZUGSZEICHENLISTE

- 100: Flor-Verfestigungsvorrichtung
- 101: Rahmen einer Flor-Verfestigungsvorrichtung
- 102_1: Obere Antriebseinrichtung
- 102_2: Untere Antriebseinrichtung
- 103_1: Obere Nadelungseinrichtung
- 103_2: Untere Nadelungseinrichtung
- 104: Vertikale Achse
- 105: Nadel-Brett
- 106: Nadeln
- 107: Florführung
- 108_1: Oberer Vor- und Rückgangsmechanismus
- 108_2: Unterer Vor- und Rückgangsmechanismus
- 109_1: Obere gemeinsame Welle
- 109_2: Untere gemeinsame Welle
- 110: Winkelumkehrvorrichtung
- 111: Steuerungseinrichtung
- 112: Antriebsstrang
- 113: Antriebsstrang
- 114: Antrieb, Motor
- 115: Antrieb, Motor
- 116: Antrieb, Motor
- 117: Einstellvorrichtung
- 2: Flor, Florbahn
- 21: Obere Platte der Florführung
- 22: Untere Platte der Florführung
- 23: Vorbestimmte Laufrichtung des Flors
- 24: Fördereinrichtung, Antriebsrolle
- 44: Vertikalachse
- 53_1: Obere Nadelungseinrichtung
- 53_2: Untere Nadelungseinrichtung
- 51_1: Obere Antriebseinrichtung
- 51_2: Untere Antriebseinrichtung
- 54: Vertikalachse
- 6: Satz von mindestens zwei Antriebseinrichtungen
- 7: Schwingungs-Erfassungseinrichtung
- 81: Schwingungs-Erfassungseinheit
- 82: Kommunikationseinheit
- 91: Kommunikationseinheit
- 92: Verarbeitungseinheit
- 93: Warnanzeigeeinheit
- S1: Erfassen der Schwingungen
- S2: Übermitteln der Daten zu den erfassten Schwingungen an die Steuerungseinrichtung
- S3: Prüfen, ob die Schwingungen kritisch sind
- S4: Betreiben der Antriebseinrichtungen ohne Änderungen
- S5: Ändern von Phasenverschiebungen und/oder Ausgeben eines Warnsignals
- S6: Übertragen der Anweisungen zu Phasenverschiebungen die Antriebseinrichtungen
- S7: Ändern der Phasenverschiebungen in den Antriebsvorrichtungen und Betreiben der Nadelungseinrichtungen mittels der neuen Phasenverschiebungen

## Patentansprüche

1. Flor-Verfestigungsvorrichtung, die zum Verfestigen von Flor (2) ausgestaltet ist und die aufweist:
- mindestens zwei Antriebseinrichtungen (51_1, 102_1, 51_2, 102_2), von denen jede ausgestaltet ist, zumindest eine Nadelungseinrichtung (53_1, 103_1, 53_2, 103_2) der Flor-Verfestigungsvorrichtung (100) anzutreiben, wobei jede Nadelungseinrichtung zum Verfestigen des Flors (2) ausgestaltet ist und von einer der mindestens zwei Antriebseinrichtungen (51_1, 102_1, 51_2, 102_2) angetrieben wird;
- mindestens eine Schwingungs-Erfassungseinrichtung (7), die ausgestaltet ist, Daten zu Schwingungen zu erfassen, wobei die Schwingungen solche Schwingungen umfassen, die durch den Betrieb der Nadelungseinrichtungen (53_1, 103_1, 53_2, 103_2) entstehen; und
- eine Steuerungseinrichtung (111), die ausgestaltet ist, die von der Schwingungs-Erfassungsvorrichtung erfassten Daten zu Schwingungen der Flor-Verfestigungsvorrichtung (100) zu empfangen und den Betrieb der mindestens zwei Antriebseinrichtungen (51_1, 102_1, 51_2, 102_2) in Erwiderung auf die empfangenen Daten zu Schwingungen zu steuern,
- wobei die Steuerungseinrichtung (111) ausgestaltet ist, den Betrieb der mindestens zwei Antriebseinrichtungen (51_1, 102_1, 51_2, 102_2) durch Übermitteln von Steuerungs-Informationen an die Antriebseinrichtungen (51_1, 102_1, 51_2, 102_2) zu steuern, wobei
- die Steuerungsinformationen Informationen zu einer Phasenverschiebung zwischen zwei der mindestens zwei Antriebseinrichtungen (51_1, 102_1, 51_2, 102_2) aufweist, mit der die zwei Antriebseinrichtungen zu betreiben sind; und
- die Phasenverschiebung eine Phasenverschiebung ist, die in Erwiderung auf das Empfangen der Daten zu Schwingungen bestimmt wurde.

2. Flor-Verfestigungsvorrichtung nach Anspruch 1, wobei die mindestens zwei Antriebseinrichtungen (51_1, 102_1, 51_2, 102_2) jeweils einen eigenen Antriebsstrang (112, 113) und einen eigenen Antrieb (114, 115) aufweisen oder jeweils einen eigenen Antriebsstrang (112, 113) und einen gemeinsamen Antrieb (116) aufweisen, wobei die Steuerungseinrichtung (111) ausgestaltet ist, die eigenen Antriebe (114, 115) oder eine Stelleinrichtung (117) im Bereich eines Antriebsstrangs (112, 113) der mindestens zwei Antriebseinrichtungen (51_1, 102_1, 51_2, 102_2) zu steuern.

3. Flor-Verfestigungsvorrichtung nach Anspruch 1, wobei die Steuerungseinrichtung (111) ausgestaltet ist:
- eine Eingabe zu erfassen, die Angaben zu der Phasenverschiebung aufweist; oder
- die Phasenverschiebung zu bestimmen.

4. Flor-Verfestigungsvorrichtung nach einem der vorstehenden Ansprüche, wobei die Daten zu den Schwingungen zumindest Folgendes anzeigen:
eine Anregungsfrequenz, die durch das Antreiben der Nadelungseinrichtungen (53_1, 103_1, 53_2, 103_2) entsteht, und eine Resonanzfrequenz der Flor-Verfestigungsvorrichtung (100) und/oder eine Schwingungsamplitude, die durch das Antreiben der Nadelungseinrichtungen (53_1, 103_1, 53_2, 103_2) entsteht, und einen Grenzwert für die Schwingungsamplitude, der im Bereich der Resonanzfrequenz der Flor-Verfestigungsvorrichtung (100) liegt, wobei die Steuerungseinrichtung (111) ausgestaltet ist, die Phasenverschiebung derart zu bestimmen, dass die Anregungsfrequenz, die durch das Antreiben der Nadelungseinrichtungen (53_1, 103_1, 53_2, 103_2) entsteht, und die Resonanzfrequenz der Flor-Verfestigungsvorrichtung (100) nicht zusammenfallen und/oder dass die Schwingungsamplitude, die durch das Antreiben der Nadelungseinrichtungen (53_1, 103_1, 53_2, 103_2) entsteht, den Grenzwert im Bereich der Resonanzfrequenz nicht überschreitet.

5. Flor-Verfestigungsvorrichtung nach Anspruch 4, wobei die Steuerungseinrichtung (111) ausgestaltet ist, die Phasenverschiebung zu bestimmen, wenn die Daten zu den Schwingungen anzeigen, dass sich die Anregungsfrequenz und die Resonanzfrequenz nähern oder dass die Schwingungsamplitude sich dem Grenzwert nähert.

6. Flor-Verfestigungsvorrichtung nach einem der vorstehenden Ansprüche, wobei die Schwingungs-Erfassungseinrichtung (7) die bei Antrieb der Nadelungseinrichtungen (53_1, 103_1, 53_2, 103_2) auftretenden Schwingungen erfasst und einen Schwingungssensor, insbesondere einen Beschleunigungssensor aufweist oder ein Schwingungssensor, insbesondere ein Beschleunigungssensor, ist.

7. Flor-Verfestigungsvorrichtung nach einem der vorstehenden Ansprüche, wobei die Schwingungs-Erfassungseinrichtung (7) einen Sensor für die Hubfrequenz der Nadelungseinrichtungen (53_1, 103_1, 53_2, 103_2) und eine gespeicherte vorrichtungsspezifische Zuordnung, insbesondere ein Kennfeld, der Hubfrequenzen zu den hierbei entstehenden Schwingungen aufweist.

8. Flor-Verfestigungsvorrichtung nach einem der Ansprüche 1 bis 11, wobei die Flor-Verfestigungsvorrichtung (100) eine Rahmen (101) aufweist, wobei die mindestens eine Schwingungs-Erfassungseinrichtung (7) an dem Rahmen (101) angeordnet ist.

9. Flor-Verfestigungsvorrichtung nach einem der vorstehenden Ansprüche, wobei die Resonanzfrequenz eine an dem Rahmen (101) erfasste Resonanzfrequenz ist, wobei die Flor-Verfestigungsvorrichtung (100) mindestens zwei Schwingungs-Erfassungseinrichtungen (7) aufweist, die an zwei verschiedenen Seiten der Flor-Verfestigungsvorrichtung (100) angeordnet sind.

10. Flor-Verfestigungsvorrichtung nach Anspruch 16, wobei zumindest eine der mindestens zwei Schwingungs-Erfassungseinrichtungen (7) oberhalb der Nadelungseinrichtungen (53_1, 103_1, 53_2, 103_2) angeordnet ist und wobei zumindest eine weitere der mindestens zwei Schwingungs-Erfassungseinrichtungen unterhalb der Nadelungseinrichtungen (53_1, 103_1, 53_2, 103_2) angeordnet ist.

11. Flor-Verfestigungsvorrichtung nach einem der vorstehenden Ansprüche, wobei:
- die Nadelungseinrichtungen mindestens eine obere Nadelungseinrichtung (53_1, 103_1) und mindestens eine untere Nadelungseinrichtung (53_2, 103_2) aufweisen, wobei die obere Nadelungseinrichtung (53_1, 103_1) an der oberen Seite des Rahmens (101) angeordnet ist und die mindestens eine untere Nadelungseinrichtung (53_1, 103_1) an der unteren Seite des Rahmens (101) angeordnet ist, wobei jede der Nadelungseinrichtungen (53_1, 103_1, 53_2, 103_2) mindestens ein Brett (105) mit Nadeln (106) zum Verfestigen des Flors (2) aufweist;
- die mindestens zwei Antriebseinrichtungen mindestens eine obere Antriebseinrichtung (51_1, 101_1) und mindestens eine untere Antriebseinrichtung (51_2, 101_2) aufweisen, wobei jede der oberen Antriebseinrichtungen (51_1, 101_1) ausgestaltet ist, eine der oberen Nadelungseinrichtungen (53_1, 103_1) anzutreiben, und jede der unteren Antriebseinrichtungen (51_2, 101_2) ausgestaltet ist, eine der unteren Nadelungseinrichtungen (53_1, 103_1) anzutreiben.

12. Flor-Verfestigungsvorrichtung nach einem der vorstehenden Ansprüche, wobei die Flor-Verfestigungsvorrichtung (100) eine Fördereinrichtung (24) zum Transport des bahnartigen Flors (2) durch die Nadelungseinrichtungen (53_1, 103_1, 53_2, 103_2) aufweist.

13. Flor-Verfestigungsvorrichtung nach einem der vorstehenden Ansprüche, wobei die Flor-Verfestigungsvorrichtung (100) eine Florführung (107) an den Nadelungseinrichtungen (53_1, 103_1, 53_2, 103_2) aufweist.

14. Steuerungseinrichtung, die ausgestaltet ist:
- Daten zu Schwingungen zu empfangen, die von einer Schwingungs-Erfassungsvorrichtung (7) einer Flor-Verfestigungsvorrichtung (100) erfasst wurden, wobei die Schwingungen solche Schwingungen umfassen, die durch den Betrieb von Nadelungseinrichtungen (53_1, 103_1, 53_2, 103_2) der Flor-Verfestigungsvorrichtung (100) entstehen; und
- den Betrieb von mindestens zwei Antriebseinrichtungen (51_1, 51_2, 101_1, 101_2) der Flor-Verfestigungsvorrichtung in Erwiderung auf das Empfangen der Daten zu Schwingungen zu steuern, wobei jede der Antriebseinrichtungen (51_1, 51_2, 101_1, 101_2) ausgestaltet ist, zumindest eine Nadelungseinrichtung (53_1, 103_1, 53_2, 103_2) der Flor-Verfestigungsvorrichtung (100) anzutreiben, und jede Nadelungseinrichtung (53_1, 103_1, 53_2, 103_2) zum Verfestigen des Flor s(2) ausgestaltet ist und von einer der mindestens zwei Antriebseinrichtungen (51_1, 51_2, 101_1, 101_2) angetrieben wird,
- wobei die Steuerungseinrichtung (111) ausgestaltet ist, den Betrieb der mindestens zwei Antriebseinrichtungen (51_1, 102_1, 51_2, 102_2) durch Übermitteln von SteuerungsInformationen an die Antriebseinrichtungen (51_1, 102_1, 51_2, 102_2) zu steuern, wobei
- die Steuerungsinformationen Informationen zu einer Phasenverschiebung zwischen zwei der mindestens zwei Antriebseinrichtungen (51_1, 102_1, 51_2, 102_2) aufweist, mit der die zwei Antriebseinrichtungen zu betreiben sind; und
- die Phasenverschiebung eine Phasenverschiebung ist, die in Erwiderung auf das Empfangen der Daten zu Schwingungen bestimmt wurde.

15. Verfahren zum Steuern des Betriebs von mindestens zwei Antriebseinrichtungen (51_1, 51_2, 101_1, 101_2) einer Flor-Verfestigungsvorrichtung (100), wobei die Flor-Verfestigungsvorrichtung (100) zum Verfestigen von Flor (2) ausgestaltet ist und jede der Antriebseinrichtungen (51_1, 51_2, 101_1, 101_2) der Flor-Verfestigungsvorrichtung (100) zumindest eine Nadelungseinrichtung (53_1, 103_1, 53_2, 103_2) der Flor-Verfestigungsvorrichtung (100) antreibt, die zum Verfestigen des Flors (2) ausgestaltet ist und von einer der mindestens zwei Antriebseinrichtungen (51_1, 51_2, 101_1, 101_2) angetrieben wird, wobei das Verfahren aufweist:
- Empfangen von Daten zu Schwingungen, die von einer Schwingungs-Erfassungsvorrichtung (7) der Flor-Verfestigungsvorrichtung (100) erfasst wurden, wobei die Schwingungen solche Schwingungen umfassen, die durch den Betrieb von Nadelungseinrichtungen (53_1, 103_1, 53_2, 103_2) der Flor-Verfestigungsvorrichtung (100) entstehen; und
- Steuern des Betriebs der mindestens zwei Antriebseinrichtungen (51_1, 51_2, 101_1, 101_2) der Flor-Verfestigungsvorrichtung (100) in Erwiderung auf das Empfangen der Daten zu Schwingungen,
- wobei die Steuerungseinrichtung (111) ausgestaltet ist, den Betrieb der mindestens zwei Antriebseinrichtungen (51_1, 102_1, 51_2, 102_2) durch Übermitteln von SteuerungsInformationen an die Antriebseinrichtungen (51_1, 102_1, 51_2, 102_2) zu steuern, wobei
- die Steuerungsinformationen Informationen zu einer Phasenverschiebung zwischen zwei der mindestens zwei Antriebseinrichtungen (51_1, 102_1, 51_2, 102_2) aufweist, mit der die zwei Antriebseinrichtungen zu betreiben sind; und
- die Phasenverschiebung eine Phasenverschiebung ist, die in Erwiderung auf das Empfangen der Daten zu Schwingungen bestimmt wurde.

## Claims

1. Fibrous-web consolidating device which is designed for consolidating a fibrous web (2) and which has:
- at least two drive installations (51_1, 102_1, 51_2, 102_2), each of which is designed for driving at least one needling installation (53_1, 103_1, 53_2, 103_2) of the fibrous-web consolidating device (100), wherein each needling installation is designed for consolidating the fibrous web (2) and is driven by one of the at least two drive installations (51_1, 102_1, 51_2, 102_2);
- at least one vibration-detecting installation (7) which is designed for detecting data pertaining to vibrations, wherein the vibrations comprise such vibrations which are created on account of the operation of the needling installations (53_1, 103_1, 53_2, 103_2); and
- a control installation (111) which is designed for receiving the data pertaining to the vibrations of the fibrous-web consolidating device (100) which are detected by the vibration-detecting device, and for controlling the operation of the at least two drive installations (51_1, 102_1, 51_2, 102_2) in response to the data received pertaining to vibrations;
- wherein the control installation (111) is designed for controlling the operation of the at least two drive installations (51_1, 102_1, 51_2, 102_2) by transmitting items of control information to the drive installations (51_1, 102_1, 51_2, 102_2); wherein
- the items of control information include items of information pertaining to a phase shift between two of the at least two drive installations (51_1, 102_1, 51_2, 102_2), the two drive installations to be operated by way of said items of information; and
- the phase shift is a phase shift which has been determined in response to the receipt of the data pertaining to vibrations.

2. Fibrous-web consolidating device according to Claim 1, wherein the at least two drive installations (51_1, 102_1, 51_2, 102_2) have in each case one dedicated drive train (112, 113) and one dedicated drive (114, 115), or have in each case one dedicated drive train (112, 113) and a common drive (116), wherein the control installation (111) is designed for controlling the dedicated drives (114, 115) or an actuation installation (117) in the region of one drive train (112, 113) of the at least two drive installations (51_1, 102_1, 51_2, 102_2).

3. Fibrous-web consolidating device according to Claim 1, wherein the control installation (111) is designed for:
- detecting an input which includes data pertaining to the phase shift; or
- determining the phase shift.

4. Fibrous-web consolidating device according to one of the preceding claims, wherein the data pertaining to the vibrations indicate at least the following:
an excitation frequency which is created by the driving of the needling installations (53_1, 103_1, 53_2, 103-2); and a resonance frequency of the fibrous-web consolidating device (100) and/or a vibration amplitude which is created by the driving of the needling installations (53_1, 103_1, 53_2, 103_2), and a limit value for the vibration amplitude that is in the range of the resonance frequency of the fibrous-web consolidating device (100), wherein the control installation (111) is designed for determining the phase shift in such a manner that the excitation frequency which is created by the driving of the needling installations (53_1, 103_1, 53_2, 103_2) and the resonance frequency of the fibrous-web consolidating device (100) do not coincide, and/or that the vibration amplitude which is created by the driving of the needling installations (53_1, 103_1, 53 ≤ 2, 103_2) does not exceed the limit value in the range of the resonance frequency.

5. Fibrous-web consolidating device according to Claim 4, wherein the control installation (111) is designed for determining the phase shift when the data pertaining to the vibrations indicate that the excitation frequency and the resonance frequency approach one another, or that the vibration amplitude approaches the limit value.

6. Fibrous-web consolidating device according to one of the preceding claims, wherein the vibration-detecting installation (7) detects the vibrations that arise when driving the needling installations (53_1, 103_1, 53_2, 103_2) and has a vibration sensor, in particular an acceleration sensor, or is a vibration sensor, in particular an acceleration sensor.

7. Fibrous-web consolidating device according to one of the preceding claims, wherein the vibration-detecting installation (7) has a sensor for the reciprocating frequency of the needling installations (53_1, 103_1, 53_2, 103_2) and includes a memorized device-specific assignation, in particular a characteristic diagram, of the reciprocating frequencies to the vibrations arising herein.

8. Fibrous-web consolidating device according to one of Claims 1 to 11, wherein the fibrous-web consolidating device (100) has a frame (101), wherein the at least one vibration-detecting installation (7) is disposed on the frame (101).

9. Fibrous-web consolidating device according to one of the preceding claims, wherein the resonance frequency is a resonance frequency detected on the frame (101), wherein the fibrous-web consolidating device (100) has at least two vibration-detecting installations (7) which are disposed on two different sides of the fibrous-web consolidating device (100) .

10. Fibrous-web consolidating device according to Claim 16, wherein at least one of the at least two vibration-detecting installations (7) is disposed above the needling installations (53_1, 103_1, 53_2, 103_2), and wherein at least a further one of the at least two vibration-detecting installations is disposed below the needling installations (53_1, 103_1, 53_2, 103_2).

11. Fibrous-web consolidating device according to one of the preceding claims, wherein:
- the needling installations have at least one upper needling installation (53_1, 103_1) and at least one lower needling installation (53_2, 103_2), wherein the upper needling installation (53_1, 103_1) is disposed on the upper side of the frame (101), and the at least one lower needling installation (53_1, 103_1) is disposed on the lower side of the frame (101), wherein each of the needling installations (53_1, 103_1, 53_2, 103_2) has at least one board (105) having needles (106) for consolidating the fibrous-web (2) ;
- the at least two drive installations have at least one upper drive installation (51_1, 101_1) and at least one lower drive installation (51_2, 101_2), wherein each of the upper drive installations (51_1, 101_1) is designed for driving one of the upper needling installations (53_1, 103_1), and each of the lower drive installations (51_2, 101_2) is designed for driving one of the lower needling installations (53_1, 103_1).

12. Fibrous-web consolidating device according to one of the preceding claims, wherein the fibrous-web consolidating device (100) has a conveyor installation (24) for transporting the web-type fibrous web (2) through the needling installations (53_1, 103_1, 53_2, 103_2).

13. Fibrous-web consolidating device according to one of the preceding claims, wherein the fibrous-web consolidating device (100) has a fibrous-web guide (107) on the needling installations (53_1, 103_1, 53_2, 103_2).

14. Control installation which is designed for:
- receiving data pertaining to vibrations which have been detected by a vibration-detecting device (7) of a fibrous-web consolidating device (100), wherein the vibrations comprise such vibrations which are created on account of the operation of needling installations (53_1, 103_1, 53_2, 103_2) of the fibrous-web consolidating device (100); and
- controlling the operation of at least two drive installations (51_1, 51_2, 101_1, 101_2) of the fibrous-web consolidating device in response to the receipt of the data pertaining to vibrations, wherein each of the drive installations (51_1, 51_2, 101_1, 101_2) is designed for driving at least one needling installation (53_1, 103_1, 53_2, 103_2) of the fibrous-web consolidating device (100), and each needling installation (53_1, 103_1, 53_2, 103_2) is designed for consolidating the fibrous web (2) and is driven by one of the at least two drive installations (51_1, 51_2, 101_1, 101_2);
- wherein the control installation (111) is designed for controlling the operation of the at least two drive installations (51_1, 102_1, 51_2, 102_2) by transmitting items of control information to the drive installations (51_2, 102_1, 51_2, 102_2); wherein
- the items of control information include items of information pertaining to a phase shift between two of the at least two drive installations (51_1, 102_1, 51_2, 102_2), the two drive installations to be operated by way of said phase shift; and
- the phase shift is a phase shift which has been determined in response to the receipt of the data pertaining to vibrations.

15. Method for controlling the operation of at least two drive installations (51_1, 51_2, 101_1, 101_2) of a fibrous-web consolidating device (100), wherein the fibrous-web consolidating device (100) is designed for consolidating a fibrous web (2), and each of the drive installations (51_1, 51_2, 101_1, 101_2) of the fibrous-web consolidating device (100) drives at least one needling installation (53_1, 103_1, 53_2, 103_2) of the fibrous-web consolidating device (100) that is designed for consolidating the fibrous web (2) and is driven by one of the at least two drive installations (51_1, 51_2, 101 ≤ 1, 101_2), wherein the method comprises:
- receiving data pertaining to vibrations which have been detected by a vibration-detecting device (7) of the fibrous-web consolidating device (100), wherein the vibrations comprise such vibrations which are created on account of the operation of needling installations (53_1, 103_1, 53_2, 103_2) of the fibrous-web consolidating device (100); and
- controlling the operation of the at least two drive installations (51_1, 51_2, 101_1, 101_2) of the fibrous-web consolidating device (100) in response to the receipt of the data pertaining to vibrations;
- wherein the control installation (111) is designed for controlling the operation of the at least two drive installations (51_1, 102_1, 51_2, 102_2) by transmitting items of control information to the drive installations (51_1, 102_1, 51_2, 102_2); wherein
- the items of control information include items of information pertaining to a phase shift between two of the at least two drive installations (51_1, 102_1, 51_2, 102_2), the two drive installations to be operated by way of said phase shift; and
- the phase shift is a phase shift which has been determined in response to the receipt of the data pertaining to vibrations.

## Revendications

1. Dispositif de consolidation de voile fibreux, qui est conçu pour consolider un voile fibreux (2) et qui comporte :
- au moins deux systèmes d'entraînement (51_1, 102_1, 51_2 ; 102_2), dont chacun est conçu pour entraîner au moins un système d'aiguilletage (53_1, 103_1, 53_2, 103_2) du dispositif de consolidation de voile fibreux (100),
chaque système d'aiguilletage étant conçu pour consolider le voile fibreux (2) et étant entraîné par l'un des au moins deux systèmes d'entraînement (51_1, 102_1, 51_2, 102_2) ;
- au moins un système de détection des vibrations (7), qui est conçu pour détecter des données concernant les vibrations, les vibrations comprenant de telles vibrations qui sont dues au fonctionnement des systèmes d'aiguilletage (53_1, 103_1, 53_2, 103_2) ; et
- un système de commande (111), qui est conçu pour réceptionner les données concernant les vibrations du dispositif de consolidation de voile fibreux (100) détectées par le dispositif de détection des vibrations et pour commander le fonctionnement des au moins deux systèmes d'entraînement (51_1, 102_1, 51_2, 102_2), en réponse aux données concernant les vibrations réceptionnées,
- le système de commande (111) étant conçu pour commander le fonctionnement des au moins deux systèmes d'entraînement (51_1, 102_1, 51_2, 102_2) par transmission d'informations de commande aux systèmes d'entraînement (51_1, 102_1, 51_2, 102_2),
- les informations de commande comportant des informations concernant un décalage de phase entre deux des au moins deux systèmes d'entraînement (51_1, 102_1, 51_2, 102_2), à l'aide duquel les deux systèmes d'entraînement doivent fonctionner ; et
- le décalage de phase étant un décalage de phase qui a été déterminé en réponse à la réception des données concernant les vibrations.

2. Dispositif de consolidation de voile fibreux selon la revendication 1, les au moins deux systèmes d'entraînement (51_1, 102_1, 51_2, 102_2) comportant chacun une propre chaîne cinématique (112, 113) et un propre entraînement (114, 115) ou comportant chacune une propre chaîne cinématique (112, 113) et un entraînement (116) commun, le système de commande (111) étant conçu pour commander les propres entraînements (114, 115) ou un système de réglage (117) dans la région d'une chaîne cinématique (112, 113) des au moins deux systèmes d'entraînement (51_1, 102_1, 51_2, 102_2).

3. Dispositif de consolidation de voile fibreux selon la revendication 1, le système de commande (111) étant conçu pour :
- entrer une saisie qui comporte des indications concernant le décalage de phase ; ou
- déterminer le décalage de phase.

4. Dispositif de consolidation de voile fibreux selon l'une quelconque des revendications précédentes, les données concernant les vibrations indiquant au moins ce qui suit :
une fréquence d'excitation qui est provoquée par l'entraînement des systèmes d'aiguilletage (53_1, 103_1, 53_2, 103_2), et une fréquence de résonance du dispositif de consolidation de voile fibreux (100) et/ou une amplitude de vibration, qui est provoquée par l'entraînement des systèmes d'aiguilletage (53_1, 103_1, 53_2, 103_2), et une valeur limite pour l'amplitude de vibration, qui se situe dans l'ordre de la fréquence de résonance du dispositif de consolidation de voile fibreux (100), le système de commande (111) étant conçu pour déterminer le décalage de phase, de telle sorte que la fréquence d'excitation qui est provoquée par l'entraînement des systèmes d'aiguilletage (53_1, 103_1, 53_2, 103_2) et la fréquence de résonance du dispositif de consolidation de voile fibreux (100) ne coïncident pas et/ou que l'amplitude de vibration, qui est provoquée par l'entraînement des systèmes d'aiguilletage (53_1, 103_1, 53_2, 103_2) ne dépasse pas la valeur limite dans l'ordre de la fréquence de résonance.

5. Dispositif de consolidation de voile fibreux selon la revendication 4, le système de commande (111) étant conçu pour déterminer le décalage de phase si les données concernant les vibrations indiquent que la fréquence d'excitation et la fréquence de résonance se rapprochent ou que l'amplitude de vibration se rapproche de la valeur limite.

6. Dispositif de consolidation de voile fibreux selon l'une quelconque des revendications précédentes, le système de détection des vibrations (7) détectant les vibrations se produisant lors de l'entraînement des systèmes d'aiguilletage (53_1, 103_1, 53_2, 103_2) et comportant un capteur de vibrations, notamment un capteur d'accélérations ou étant un capteur de vibrations, notamment un capteur d'accélérations.

7. Dispositif de consolidation de voile fibreux selon l'une quelconque des revendications précédentes, le système de détection des vibrations (7) comportant un capteur pour la fréquence de course des systèmes d'aiguilletage (53_1, 103_1, 53_2, 103_2) et comportant une affectation mémorisée spécifique au dispositif, notamment un diagramme caractéristique des fréquences de course concernant les vibrations provoquées à cet effet.

8. Dispositif de consolidation de voile fibreux selon l'une quelconque des revendications 1 à 11, le dispositif de consolidation de voile fibreux (100) comportant un cadre (101), l'au moins un système de détection des vibrations (7) étant placé sur le cadre (101) .

9. Dispositif de consolidation de voile fibreux selon l'une quelconque des revendications précédentes, la fréquence de résonance étant une fréquence de résonance détectée sur le cadre (101), le dispositif de consolidation de voile fibreux (100) comportant au moins deux systèmes de détection des vibrations (7) qui sont placés sur deux côtés différents du dispositif de consolidation de voile fibreux (100).

10. Dispositif de consolidation de voile fibreux selon la revendication 16, au moins l'un des au moins deux systèmes de détection des vibrations (7) étant placé au-dessus des systèmes d'aiguilletage (53_1, 103_1, 53_2, 103_2) et au moins un autre des au moins deux systèmes de détection des vibrations étant placé en-dessous des systèmes d'aiguilletage (53_1, 103_1, 53_2, 103_2) .

11. Dispositif de consolidation de voile fibreux selon l'une quelconque des revendications précédentes :
- les systèmes d'aiguilletage comportant au moins un système d'aiguilletage (53_1, 103_1) supérieur et au moins un système d'aiguilletage (53_2, 103_2) inférieur, le système d'aiguilletage (53_1, 103_1) supérieur étant placé sur le côté supérieur du cadre (101) et l'au moins un système d'aiguilletage (53_1, 103_1) inférieur étant placé sur le côté inférieur du cadre (101), chacun des systèmes d'aiguilletage (53_1, 103_1, 53_2, 103_2) comportant au moins une planche (105) pourvue d'aiguilles (106) pour consolider le voile fibreux (2) ;
- les au moins deux systèmes d'entraînement comportant au moins un système d'entraînement (51_1, 101_1) supérieur et au moins un système d'entraînement (51_2, 101_2) inférieur, chacun des systèmes d'entraînement (51_1, 101_1) supérieurs étant conçu pour entraîner l'un des systèmes d'aiguilletage (53_1, 103_1) supérieurs, et chacun des systèmes d'entraînement (51_2, 101_2) inférieurs étant conçu pour entraîner l'un des systèmes d'aiguilletage (53_1, 103_1) inférieurs.

12. Dispositif de consolidation de voile fibreux selon l'une quelconque des revendications précédentes, le dispositif de consolidation de voile fibreux (100) comportant un système de convoyage (24) pour le transport du voile fibreux (2) sous forme de bande à travers les systèmes d'aiguilletage (53_1, 103_1, 53_2, 103_2) .

13. Dispositif de consolidation de voile fibreux selon l'une quelconque des revendications précédentes, le dispositif de consolidation de voile fibreux (100) comportant un guidage de voile fibreux (107) sur les systèmes d'aiguilletage (53_1, 103_1, 53_2, 103_2).

14. Système de commande, qui est conçu pour :
- réceptionner des données concernant les vibrations qui ont été détectées par un dispositif de détection des vibrations (7) d'un dispositif de consolidation de voile fibreux (100), les vibrations comprenant de telles vibrations qui sont dues au fonctionnement des systèmes d'aiguilletage (53_1, 103_1, 53_2, 103_2) du dispositif de consolidation de voile fibreux (100) ; et
- commander le fonctionnement d'au moins deux systèmes d'entraînement (51_1, 51_2, 101_1, 101_2) du dispositif de consolidation de voile fibreux, en réponse à la réception des données concernant les vibrations, chacun des systèmes d'entraînement (51_1, 51_2, 101_1, 101_2) étant conçu pour entraîner au moins un système d'aiguilletage (53_1, 103_1, 53_2, 103_2) du dispositif de consolidation de voile fibreux (100), et chaque système d'aiguilletage (53_1, 103_1, 53_2, 103_2) étant conçu pour consolider le voile fibreux (2) et étant entraîné par l'un des au moins deux systèmes d'entraînement (51_1, 51_2, 101_1, 101_2),
- le système de commande (111) étant conçu pour commander le fonctionnement des au moins deux systèmes d'entraînement (51_1, 102_1, 51_2, 102_2), par transmission d'informations de commande aux systèmes d'entraînement (51_1, 102_1, 51_2, 102_2),
- les informations de commande comportant des informations concernant un décalage de phase entre deux des au moins deux systèmes d'entraînement (51_1, 102_1, 51_2, 102_2), à l'aide duquel les deux systèmes d'entraînement doivent fonctionner ; et
- le décalage de phase étant un décalage de phase qui a été déterminé en réponse à la réception des données concernant les vibrations.

15. Procédé, destiné à commander le fonctionnement d'au moins deux systèmes d'entraînement (51_1, 51_2, 101_1, 101_2) d'un dispositif de consolidation de voile fibreux (100), le dispositif de consolidation de voile fibreux (100) étant conçu pour consolider un voile fibreux (2) et chacun des systèmes d'entraînement (51_1, 51_2, 101_1, 101_2) du dispositif de consolidation de voile fibreux (100) entraînant au moins un système d'aiguilletage (53_1, 103_1, 53_2, 103_2) du dispositif de consolidation de voile fibreux (100) qui est conçu pour consolider le voile fibreux (2) et est entraîné par l'un des au moins deux systèmes d'entraînement (51_1, 51_2, 101_1, 101_2), le procédé comportant :
- la réception de données concernant les vibrations, qui ont été détectées par un dispositif de détection des vibrations (7) du dispositif de consolidation de voile fibreux (100), les vibrations comprenant de telles vibrations qui sont dues au fonctionnement de systèmes d'aiguilletage (53_1, 103_1, 53_2, 103_2) du dispositif de consolidation de voile fibreux (100) ; et
- la commande du fonctionnement des au moins deux systèmes d'entraînement (51_1, 51_2, 101_1, 101_2) du dispositif de consolidation de voile fibreux (100), en réponse à la réception des données concernant les vibrations,
- le système de commande (111) étant conçu pour commander le fonctionnement des au moins deux systèmes d'entraînement (51_1, 102_1, 51_2, 102_2) par transmission d'informations de commande aux systèmes d'entraînement (51_1, 102_1, 51_2, 102_2),
- les informations de commande comportant des informations concernant un décalage de phase entre deux des au moins deux systèmes d'entraînement (51_1, 102_1, 51_2, 102_2), à l'aide duquel les deux systèmes d'entraînement doivent fonctionner ; et
- le décalage de phase étant un décalage de phase qui a été déterminé en réponse à la réception des données concernant les vibrations.
